# EUROPEAN PATENT APPLICATION

(11) **EP 3 556 818 A1**
(43) Date of publication of application: **23.10.2019**
(21) Application number: 17879885.6
(22) Date of filing: 14.12.2017
(51) Int. Cl.: C09D 11/10, B41J 2/01

(54) **PRINTING INK COMPOSITION FOR SOFT PACKAGING LAMINATE**

(30) Priority: 15.12.2016 JP 2016243677; 28.07.2017 JP 2017146813; 29.11.2017 JP 2017228805
(71) Applicant: Sakata INX Corporation, Osaka-shi, Osaka 550-0002 (JP)
(72) Inventor: HARADA, Junichi, Osaka-shi Osaka 550-0002 (JP); OGAWA, Toru, Osaka-shi Osaka 550-0002 (JP); MAEOKA, Yoshiaki, Osaka-shi Osaka 550-0002 (JP); TAKABAYASHI, Ryo, Osaka-shi Osaka 550-0002 (JP); AKASAKA, Kenta, Osaka-shi Osaka 550-0002 (JP)
(74) Representative: Botti, Mario
(86) International application number: PCT/JP2017/044967
(87) International publication number: WO 2018/110664

(57) **Abstract**

Provided is a flexible package laminate print ink composition including a pigment, a binder resin, and an organic solvent. The binder resin includes polyurethane resin including a biomass polyurethane resin obtained by a reaction of a biopolyester polyol component and an organic diisocyanate component, and includes, at a terminal thereof, a primary or secondary amino group. The biopolyester polyol component includes a dicarboxylic acid, a certain amount of organic acid having three or more active hydrogen groups, each having a certain molecular weight, and diol. At least one of the dicarboxylic acid and the diol is plant-derived, and has NCO group/OH group=1.2 to 3.0. A content of the biomass polyurethane resin in the polyurethane resin is 5 mass% to 100 mass%.

## Description

### TECHNICAL FIELD

The present invention relates to a flexible package laminate print ink composition. More specifically, the present invention relates to a flexible package laminate print ink composition having a good pigment dispersibility and being excellent in resistance such as blocking resistance and laminate suitability.

### BACKGROUND ART

In recent years, focus has been given on "biomass" as an industrial resource which is not an exhaustible resource. The "biomass" is "a renewable and organism-derived organic resource excluding a fossil resource". Moreover, for the purpose of environmental preservation, from 1980's, there has been developed a biomass polymer using a biomass as a raw material. It is considered that the biomass polymer is useful as a global warming prevention measure. The biomass polymer is expected to be used as a material for various products such as forming, fibers, non-woven fabric, package, toner, ink, paint, film sheet, foam, coating, and adhesive. In Patent Document 1, there is disclosed a plant-derived biopolyurethane resin with a high raw material utilization ratio. In Patent Documents 2 and 3, there is disclosed a manufacturing method of a biopolyurethane resin in which a content of an organic acid having a pKa value equal to or less than 3.7 at 25°C in a dicarboxylic acid is 0 ppm to 1,000 ppm with respect to the dicarboxylic acid.

### PRIOR ART DOCUMENTS

### Patent Documents

Patent Document 1: JP 2014-37552 A
Patent Document 2: JP 2011-225851 A
Patent Document 3: JP 2015-096621 A

### SUMMARY OF THE INVENTION

However, the biopolyurethane resin described in Patent Documents 1 to 3 is not sufficient when higher blocking characteristic and laminate suitability are required in a case of use as an ink composition. In particular, ink compositions using the biopolyurethane resin described in Patent Documents 1 to 3 are not sufficient when higher blocking resistance and laminate suitability are required in a case of use for a flexible package.

The present invention has been made in view of such problems in the related-art, and has an object to provide a flexible package laminate print ink composition, which is capable of contributing to prevention of global warming and reduction in environmental load, is good in pigment dispersibility, and exhibits excellent blocking resistance and laminate suitability even in a case of use for a flexible package. Moreover, the present invention has an object to provide a flexible package laminate print ink composition, which is capable of contributing to prevention of global warming and reduction in environmental load, is good in pigment dispersibility, and exhibits excellent laminate suitability even in a case of use for a flexible package.

As a result of extensive studies conducted to solve the problems described above, the inventors of the present invention found that an ink composition, which is capable of contributing to prevention of global warming and reduction in environmental load and has excellent blocking characteristic and laminate suitability even in a case of use for a flexible package, can be obtained with the following features and completed the present invention (first invention). The ink composition includes, as a polyurethane resin, a biomass polyurethane resin obtained by a reaction of a biopolyester polyol component and an organic diisocyanate component, and includes, at a terminal thereof, at least one of a primary amino group and a secondary amino group. The biopolyester polyol component of the biomass polyurethane resin is a reaction product of a dicarboxylic acid and diol, and does not include an organic acid having three or more active hydrogen groups, each having a molecular weight equal to or less than 300 in one molecule or includes the organic acid so as to be equal to or less than 3,000 ppm with respect to the dicarboxylic acid, and at least one of the dicarboxylic acid and the diol is plant-derived. A ratio of an NCO group of the organic diisocyanate component to an OH group of the polyester polyol component in the biomass polyurethane resin is NCO group/OH group=1.2 to 3.0.

Moreover, the inventors of the present invention found that an ink composition, which is capable of contributing to prevention of global warming and reduction in environmental load and has excellent laminate suitability even in a case of use for a flexible package, can be obtained and completed the present invention (second invention). The ink composition includes a polyurethane resin having a certain terminal group structure, and includes a certain amount of biomass polyurethane resin as a polyurethane resin.

That is, according to one aspect of the present invention (first invention) for solving the problems described above, there is provided a flexible package laminate print ink composition, including: a pigment; a binder resin; and an organic solvent, in which the binder resin includes a polyurethane resin; the polyurethane resin includes a biomass polyurethane resin obtained by a reaction of a biopolyester polyol component and an organic diisocyanate component, and includes, at a terminal thereof, at least one of a primary amino group and a secondary amino group; the biopolyester polyol component is a reaction product of a dicarboxylic acid and diol, and does not include an organic acid having three or more active hydrogen groups, each having a molecular weight equal to or less than 300 in one molecule, or includes the organic acid so as to be equal to or less than 3,000 ppm with respect to the dicarboxylic acid; at least one of the dicarobxylic acid and the diol is plant-derived; a ratio of an NCO group of the organic diisocyanate component to an OH group of the polyester polyol component in the polyurethane resin is NCO group/OH group=1.2 to 3.0; and a content of the biomass polyurethane resin in the polyurethane resin is 5 mass% to 100 mass%.

Moreover, according to one aspect of the present invention (second invention) for solving the problems described above, there is provided a flexible package laminate print ink composition, including: a pigment; a binder resin; and an organic solvent, in which the binder resin includes a polyurethane resin; the polyurethane resin includes a biomass polyurethane resin, and includes, at a terminal thereof, at least one of a primary amino group and a secondary amino group; a content of the biomass polyurethane resin in the polyurethane resin is 10 mass% to 100 mass%.

### EMBODIMENT FOR CARRYING OUT THE INVENTION

### [Embodiment related to first invention]

### <Flexible Package Laminate Print Ink Composition>

A flexible package laminate print ink composition (hereinafter also referred to as "ink composition") according to one embodiment of the present invention mainly includes a pigment, a binder resin, and an organic solvent. Each of those elements will be described below.

### (Pigment)

Examples of the pigment include an inorganic pigment, an organic pigment, and an extender pigment, which are generally used in an ink composition comprising an organic solvent. Examples of the inorganic pigment include titanium oxide, red iron oxide, antimony red, cadmium red, cadmium yellow, cobalt blue, iron blue, ultramarine blue, carbon black, graphite and the like. Examples of the organic pigment include a soluble azo pigment, an insoluble azo pigment, an azo lake pigment, a condensation azo pigment, a copper phthalocyanine pigment, a polycyclic condensed pigment and the like. Examples of the extender pigment include calcium carbonate, kaolin clay, barium sulfate, aluminum hydroxide, talc and the like.

A content of the pigment is not particularly limited. As one example, the pigment is contained in the ink composition so as to be from 0.5 mass% to 50 mass%. When the content of the pigment is less than 0.5 mass%, coloring is liable to be insufficient. Meanwhile, when the content of the pigment exceeds 50 mass%, a printability is liable to be insufficient.

### (Binder Resin)

The binder resin includes a polyurethane resin. The polyurethane resin includes a biomass polyurethane resin. The biomass polyurethane resin is a reaction product of a biopolyol component and an isocyanate component, which are described later.

In this embodiment, the polyurethane resin is obtained by a reaction of a dicarboxylic acid and diol, and includes a biomass polyurethane resin obtained by a reaction of a biopolyester polyol component and an organic diisocyanate component, in which at least one of the dicarboxylic acid and the diol is plant-derived. Moreover, the polyurethane resin does not include an organic acid having three or more active hydrogen groups, each having a molecular weight equal to or less than 300 in one molecule, or includes the organic acid so as to be equal to or less than 3,000 ppm with respect to the dicarboxylic acid. Moreover, in the biopolyurethane resin, an OH group of the biopolyester polyol component of the biomass polyurethane resin and an NCO group of the organic diisocyanate component satisfies NCO group/OH group=1.2 to 3.0. Through inclusion of such biopolyurethane resin, an ink composition, which is capable of contributing to prevention of global warming and reduction in environmental load and has excellent blocking characteristic and laminate suitability even in a case of use for a flexible package, can be obtained.

The polyurethane resin in this embodiment includes, at a terminal thereof, at least one of a primary amino group and a secondary amino group. Through inclusion of such binder resin, the ink composition according to this embodiment has improved pigment dispersibility, thereby being capable of increasing a pigment concentration in the ink composition. As a result, the ink composition can be printed through use of a shallow plate. Through the use of the shallow plate, a required solvent amount is reduced. Thus, the ink composition according to this embodiment may further reduce an environmental load. Moreover, through the inclusion of such binder resin, when printed on a flexible package, a printed product to be obtained is excellent in laminate suitability.

The primary amino group or the secondary amino group may be included in the biomass polyurethane resin included in the polyurethane resin of this embodiment, or may be included in a polyurethane resin other than the biomass polyurethane resin. When printed on a flexible package, the ink composition according to this embodiment is excellent in pigment dispersibility, printability, and laminate suitability of a pronted product to be obtained, and hence it is preferred that 20% or more, particularly preferably, all of terminals of the biomass polyurethane resin and a plolyurethane resin other than the biomass polyurethane resin include the primary amino group or the secondary amino group.

A manufacturing method of the polyurethane resin including, at the terminal thereof, the primary amino group or the secondary amino group is not particularly limited. For example, such polyurethane resin may be obtained by the following methods (1) to (4).
(1) A method of obtaining a polyurethane resin having a primary amino group or a secondary amino group in the following manner. A chain extender is added to a urethane prepolymer obtained by a reaction of high molecular polyol and polyisocianate and having an isocyanate group at a terminal thereof to cause chain extension and obtain a urethane prepolymer having an isocyanate group at a terminal thereof. After that, a reaction terminator which is other than a polyamine compound having the primary amino groups or the secondary amino groups at both terminals thereof is caused to react. Next, a reaction terminator which is a polyamine compound having the primary amino groups or the secondary amino groups at both terminals thereof is caused to react.
(2) A method of obtaining a polyurethane resin having a primary amino group or a secondary amino group in the following manner. A chain extender is added to a urethane prepolymer obtained by a reaction of high molecular polyol and polyisocianate and having an isocyanate group at a terminal thereof to cause chain extension and obtain a urethane prepolymer having an isocyanate group at a terminal thereof. After that, as reaction terminators, a reaction terminator other than a polyamine compound having the primary amino groups or the secondary amino groups at both terminals thereof and a reaction terminator which is a polyamine compound having the primary amino groups or the secondary amino groups at both terminals thereof are simultaneously added to cause reaction.
(3) A method of obtaining a polyurethane resin having a primary amino group or a secondary amino group in the following manner. A chain extender is added to a urethane prepolymer obtained by a reaction of high molecular polyol and polyisocianate and having an isocyanate group at a terminal thereof to cause chain extension and obtain a urethane prepolymer having an isocyanate group at a terminal thereof. After that, as a reaction terminator, a polyamine compound having primary amino groups or secondary amino groups at both terminals thereof is caused to react to bring chain extension and reaction termination to effect simultaneously.
(4) A method of obtaining a polyurethane resin having a primary amino group or a secondary amino group in the following manner. A polyamine compound having primary amino groups or secondary amino groups at both terminals thereof is caused to react with a urethane prepolymer obtained by a reaction of high molecular polyol and polyisocianate and having an isocyanate group at a terminal thereof to bring chain extension and reaction termination to effect simultaneously.

The polyisocyanate to be used for those methods is not particularly limited. For example, the polyisocyanate is obtained by mixing an aromatic diisocyanate compound such as tolylene diisocyanate, an alicyclic diisocyanate compound such as 1,4-cyclohexane diisocyanate or isophorone diisocyanate, an aliphatic diisocyanate compound such as hexamethylene diisocyanate, and an aliphatic-aromatic diisocyanate compound such as α,α,α',α'-tetramethyl xylilenediisocyanate.

The high molecular polyol compound to be used for those methods is not particularly limited. For example, the high molecular polyol compound is a high molecular diol compound among various types such as polyester diols or polycaprolactone diols, which are obtained by a condensation reaction of polyalkylene glycols such as polyethylene glycol and polypropylene glycol, a polyether diol compound such as an alkylene oxide addition product, for example, ethylene oxide of bisphenol A or propylene oxide, a dibasic acid such as an adipic acid, a sebacic acid, or phthalic anhydride, and glycols such as ethylene glycol, propylene glycol, 1,4-butane diol, neopentylglycol, or 3-methyl-1,5-pentane diol.

Those high molecular diol compounds may be used together with alkane diol such as 1,4-pentane diol, 2,5-hexane diol, or 3-methyl-1,5-pentane diol, and a low molecular diol compound such as ethylene glycol, propylene glycol, 1,4-butane diol, or 1,3-butane diol.

In the ink composition according to this embodiment, a ratio of an NCO group of the organic diisocyanate component to an OH group of the polyester polyol component in the polyurethane resin satisfies NCO group/OH group=1.2 to 3.0. With regard to a blend ratio of the polyisocyanate and the high molecular polyol compound, it is only required that an equivalence ratio (isocyanate index) of isocyanate group: hydroxyl group be 1.2:1 or more, and it is more preferred that the equivalence ratio be 1.3:1 or more. Moreover, it is only required that the isocyanate index be 3.0:1 or less, and it is more preferred that the isocyanate index be 2.0:1 or less. When the isocyanate index is less than 1.2, the polyurethane resin is more liable to be flexible. As a result, the ink composition is liable to be degraded in blocking resistance at the time of printing.

The chain extender to be used for the methods (1) to (3) described above is not particularly limited. Examples of the chain extender include: aliphatic diamines such as ethylenediamine, propylenediamine, tetramethylenediamine, and hexamethylenediamine; alicyclic diamines such as isophorone diamine and 4,4'-dicyclohexyl methanediamine; polyamines such as diethylenetriamine and triethylenetetratriamine; aromatic diamines such as toluylenediamine; aliphatic-aromatic diamines such as xylenediamine; diamines having a hydroxyl group such as N-(2-hydroxyethyl)ethylenediamine, N-(2-hydroxyethyl)propylenediamine, and N,N'-di(2-hydroxyethyl)ethylenediamine; and diol compounds such as ethylene glycol, propylene glycol, 1,4-butane diol, neopentylglycol, diethylene glycol, and triethylene glycol.

The reaction terminator to be used for the methods (1) and (2) described above is not particularly limited. Examples of the reaction terminator include: a polyamine compound having primary amino groups or secondary amino groups at both terminals thereof; and a reaction terminator such as a monoamine compound or a monoalcohol compound. The reaction terminator to be used for the method (3) described above is not particularly limited. As one example, the reaction terminator is a polyamine compound having primary amino groups or secondary amino groups at both terminals thereof. The compound for simultaneously causing the chain extension and the reaction termination to be used for the method (4) described above is not particularly limited. The compound may be only the chain extender described above, or the chain extender and the reaction terminator may be used together.

The polyurethane resin having the amino group is excellent in storage stability and pigment dispersibility, and hence it is preferred that the polyurethane resin be subjected to reaction termination with the polyamine compound having primary amino groups or secondary amino groups at both terminals thereof so as to have an amine value of from 1 mgKOH/g to 13 mgKOH/g.

The polyamine compound having primary amino groups or secondary amino groups at both terminals thereof is not particularly limited. Examples of the polyamine compound include: aliphatic diamines such as ethylenediamine, propylenediamine, tetramethylenediamine, and hexamethylenediamine; alicyclic diamines such as isophorone diamine and 4,4'-dicyclohexyl methanediamine; polyamines such as diethylenetriamine and triethylenetetratriamine; aromatic diamines such as toluylenediamine; aliphatic-aromatic diamines such as xylenediamine; and diamines having a hydroxyl group such as N-(2-hydroxyethyl)ethylenediamine and N-(2-hydroxyethyl)propylenediamine.

Such reaction terminator which may be used together with the polyamine compound having primary amino groups or secondary amino groups at both terminals thereof is not particularly limited. Examples of the reaction terminator include a monoamine compound and a monoalcohol compound, which are known reaction terminators. Specifically, examples of the reaction terminator include: monoalkylamines such as n-propylamine and n-butylamine; dialkylamines such as di-n-butylamine; alkanolamines such as monoethanolamine and diethanolamine; and monoalcohols such as ethanol.

In this embodiment, it is only required that molecular weights, chemical structures, and equivalence ratios of the components be suitably adjusted based on, for example, a desired hardness of the polyurethane resin.

It is preferred that a number average molecular weight of the polyurethane resin in this embodiment be 10,000 or more. Moreover, it is preferred that a number average molecular weight of the polyurethane resin be 70,000 or less, more preferably 50,000 or less.

A content of the polyurethane resin in this embodiment is not particularly limited. As one example, it is preferred that a content of the polyurethane resin be 5 mass% or more, more preferably 20 mass% or more in the ink composition. When the content of the polyurethane resin is less than 5 mass%, the ink composition is liable to be degraded in pigment dispersibility. When the polyurethane resin is contained within the range of the content described above, the ink composition to be obtained may exhibit, even when printed through use of a plate cylinder formed into a shallow plate, favorable print concentration, printability, and laminate suitability similar to the related-art ink composition.

Next, description is made of the biomass polyurethane resin included in the polyurethane resin in this embodiment. With regard to description of the biomass polyurethane resin, description in common with the polyurethane resin described above is suitably omitted.

The biomass polyurethane resin is a polyurethane resin including a biomass-derived (plant-derived) component. In this embodiment, the biomass polyurethane resin is capable of contributing to prevention of global warming and reduction in environmental load more than the case of using other exhaustible resource, and hence it is preferred that the biomass polyurethane resin be obtained by a reaction of the biopolyol component and the isocyanate component, more preferably bioisocyanate including a plant-derived isocyanate component.

The biopolyol component is capable of contributing to prevention of global warming and reduction in environmental load due to an increase in biomass component in the ink composition to be obtained, and hence the biopolyol component is obtained by a reaction of a dicarboxylic acid and diol. The biopolyol component may include an organic acid having three or more active hydrogen groups, each having a molecular weight equal to or less than 300. It is only required that a content of such organic acid be 3,000 ppm or less with respect to the plant-oil-derived dicarboxylic acid, and it is preferred that the content be from 1,000 ppm to 3,000 ppm. It is preferred that there be given a biopolyester polyol component in which at least one of the dicarboxylic acid and the diol is plant-derived, more preferably a biopolyester polyol component obtained by a reaction of a plant-oil-derived dicarboxylic acid component, an organic acid component having three or more active hydrogen groups, each having a molecular weight equal to or less than 300 in one molecule, and a plant-oil-derived short-chain diol component.

The plant-derived short-chain diol component is not particularly limited. For example, the short-chain diol component may be 1,3-propane diol, 1,4-butane diol, or ethylene glycol obtained from a plant raw material by the following method. Those may be used together.

The 1,3-propane diol may be manufactured, by a fermentation process of dissolving a plant resource (for example, corn) to obtain glucose, from glycerol through 3-hydroxypropyl aldehyde (HPA). The 1,3-propane diol compound manufactured by the bio process like the fermentation process described above, as compared to 1,3-propane diol compound obtained by an EO manufacturing process, a byproduct such as a lactic acid useful in terms of safety can be obtained, and manufacturing cost can be suppressed. The 1,4-butane diol can be manufactured by obtaining a succinic acid obtained through manufacture and fermentation of glycol from a plant resource and adding water thereto. Moreover, the ethylene glycol may be manufactured through ethylene from bioethanol obtained by a normal process.

The plant-derived dicarboxylic acid component is not particularly limited. Examples of the dicarboxylic acid component include a sebacic acid, a succinic acid, a lactic acid, a glutaric acid, and a dimer acid. Those may be used together. Among those, from the viewpoint that the ink composition to be obtained is more excellent in blocking resistance and laminate suitability of a printed product when printed on a flexible package, it is preferred that the dicarboxylic acid component include at least one selected from the group consisting of a sebacic acid, a succinic acid, and a dimer acid.

The organic acid component having three or more active hydrogen groups, each having a molecular weight equal to or less than 300 in one molecule is not particularly limited. Examples of the organic acid component having three or more active hydrogen groups, each having a molecular weight equal to or less than 300 in one molecule include a malic acid, a succinic acid, and a tartaric acid. Those may be used together. It is preferred that a use amount of the organic acid component having three or more active hydrogen groups, each having a molecular weight equal to or less than 300 in one molecule be 3,000 ppm or less with respect to the dicarboxylic acid, more preferably from 1,000 ppm to 3,000 ppm. When the use amount of the organic acid component having three or more active hydrogen groups, each having a molecular weight equal to or less than 300 in one molecule is 1,000 ppm or more with respect to the dicarboxylic acid, in a case in which higher resistance is required, blocking characteristic and retort characteristic are likely to be favorably expressed.

The biopolyol component may be produced as a plant-derived biopolyester polyol by causing a sutiable reaction of a plant-derived short-chain diol component, a plant-derived carboxylic acid component, and an organic acid component having three or more active hydrogen groups, each having a molecular weight equal to or less than 300 in one molecule. Specifically, the polyester polyol is obtained through direct dehydration condensation of a plant-derived sebacic acid, plant-derived 1,3-propane diol, and a malic acid. Moreover, through the direct dehydration condensation of a plant-derived succinic acid, plant-derived 1,4-butane diol, and a malic acid, a polyester polyol can be obtained. Those may be used together.

The plant-derived bioisocyanate can be obtained by transforming a plant-derived bivalent carboxylic acid into a terminal amino group through acid amidation and reduction, and further transforming the amino group into an isocyanate group through a reaction with phosgene. Examples of the plant-derived biopolyisocyanate include dimer acid diisocyanate (DDI), octamethylene diisocyanate, decamethylene diisocyanate and the like. Moreover, the plant-derived isocyanate compound can be obtained also by using a plant-derived amino acid as a raw material and transforming an amino group thereof into an isocyanate group. For example, lysine diisocyanate (LDI) can be obtained by subjecting a carboxyl group of lysine to methyl esterification and thereafter transforming an amino group into an isocyanate group. Moreover, 1,5-pentamethylene diisocyanate can be obtained by subjecting a carboxyl group of lysine to decarboxylation and thereafter transforming an amino group into an isocyanate group.

It is only required that, in terms of environment, the biomass polyurethane resin be contained in the polyurethane resin by 5 mass% or more in a solid content conversion, more preferably 40 mass% or more, and may be 100 mass%.

Returning to the overall description of the binder resin, in this embodiment, from the viewpoint that the pigment dispersibility and the blocking resistance of a printed product to be obtained when the ink composition is printed on a flexible package are improved, it is preferred that, in addition to the polyurethane resin, a vinyl chloride/vinyl acetate copolymer, a vinyl chloride acrylic copolymer, gun cotton, a cellulose acetate propionate resin, and other binder resin be used together with the binder resin.

### (Vinyl chloride/vinyl acetate-based copolymer and vinyl chloride acrylic copolymer)

In a case in which the pigment is not sufficiently dispersed by only including the polyurethane resin, or in a case of improving the adhesiveness or laminate suitability of a metal deposition film or the like, it is preferred that the ink composition include a vinyl chloride/vinyl acetate-based copolymer and/or a vinyl chloride acrylic copolymer to be used together.

As the vinyl chloride/vinyl acetate copolymer, there may be used a vinyl chloride/vinyl acetate copolymer which is manufactured by a conventionally known method with a vinyl chloride monomer and a vinyl acetate monomer having hitherto been used for a gravure print ink composition as essentially required components and, as needed, with a fatty acid vinyl monomer such as vinyl propionate, vinyl monochlororate, vinyl versatate, vinyl laurate, vinyl stearate, and vinyl benzoate and a monomer having a functional group such as a hydroxyl group.

Among those, with regard to the vinyl chloride/vinyl acetate-based copolymer, for an organic solvent of an ink in consideration of an environment, it is favorable to employ a vinyl chloride/vinyl acetate-based copolymer having a hydroxyl group, preferably, 50 to 200 hydroxyl groups. Such vinyl chloride/vinyl acetate-based copolymer having a hydroxyl group can be obtained by subjecting part of an acetic ester portion to saponification and introducing a (meth)acrylic monomer having a hydroxyl group.

In the case of the vinyl chloride/vinyl acetate-based copolymer having a hydroxyl group obtained by subjecting part of the acetic ester portion to saponification, a film physical property and a dissolution behavior of the resin is determined based on a ratio of a constituting unit based on a reaction part of vinyl chloride in a molecule (following Formula 1), a constituting unit based on a reaction part of vinyl acetate (following Formula 2), and a constituting unit based on saponification of a reaction part of vinyl acetate (following Formula 3). That is, the constituting unit based on the reaction part of the vinyl chloride gives a strength and a hardness of the resin film, the constituting unit based on a reaction part of vinyl acetate gives an adhesiveness and a flexibility, and the constituting unit based on saponification of a reaction part of vinyl acetate gives a favorable solubility to an organic solvent of an ink in consideration of the environment.

Formula 1 -CH₂-CHCl-

Formula 2 -CH₂-CH(OCOCH₃)-

Formula 3 -CH₂-CH(OH)-

Such vinyl chloride/vinyl acetate-based copolymer resin may be the one which is commercially available, and examples thereof include Solbin A, AL, TA5R, TA2, TA3, TAO, TAOL, C, CH, CN, and CNL manufactured by Nissin Chemical Co., Ltd.

In view of the solubility with respect to an organic solvent used for the flexible package laminate print ink composition according to the present invention and printability, the vinyl chloride/vinyl acetate-based copolymer resin described above may have various functional groups in a molecule.

Moreover, when a solvent in consideration of an environment is to be used as the organic solvent, it is preferred that the vinyl chloride/vinyl acetate-based copolymer described above have 50 to 200 hydroxyl groups. As a commercially available product of such vinyl chloride/vinyl acetate-based copolymer, it is preferred that, for example, Solbin A, AL, TA5R, TA2, TA3, TAO, and TAOL be used. Specific examples of such vinyl chloride/vinyl acetate-based copolymer having a hydroxyl group include Solbin A, AL, TA5R, TA2, TA3, TAO, TAOL, C, CH, CN, and CNL manufactured by Nissin Chemical Co., Ltd.

As the vinyl chloride acrylic copolymer, there may be provided the one including a copolymer of vinyl chloride and an acrylic monomer as a main component. A mode of the copolymer is not particularly limited. For example, the acrylic monomer may be incorporated to a main chain of polyvinyl chloride in a block or in a randam form, or may be copolymerized to a side chain of the polyvinyl chloride.

As an acrylic monomer, there may be used, for example, a (meth)acrylic ester and an acrylic monomer having a hydroxyl group. Examples of the (meth)acrylic ester include a (meth)acrylic alkyl ester. The alkyl group may be any of straight chain, branched, and annular. Howevever, it is preferred that the alkyl group be a straight chain alkyl group. Examples of the acrylic monomer include methyl (meth)acrylate, ethyl (meth)acrylate, propyl (meth)acrylate, buytl (meth)acrylate, pentyl (meth)acrylate, hexyl (meth)acrylate, cyclohexyl (meth)acrylate, 2-ethylhexyl (meth)acrylate, isooctyl (meth)acrylate, decyl (meth)acrylate, dodecyl (meth)acrylate, tetradecyl (meth)acrylate, hexadecyl (meth)acrylate, and octadecyl (meth)acrylate. Examples of the acrylic monomer having a hydroxyl group include: hydroxyalkyl (meth)acrylates such as 2-hydroxyethyl (meth)acrylate, 2-hydroxypropyl (meth)acrylate, 3-hydroxypropyl (meth)acrylte, 2-hydroxybutyl (meth)acrylate, 3-hydroxybutyl (meth)acrylate, 4-hydroxybutyl (meth)acrylate, 6-hydroxyhexyl (meth)acrylate, and 8-hydroxyoctyl (meth)acrylate; glycol mono(meth)acrylates such as polyethylene glycol mono(meth)acrylate, polypropylene glycol mono(meth)acrylate, and 1,4-cyclohexanedimethanol mono(meth)acrylate; caprolactone-modified (meth)acrylate; and hydroxyethyl acrylamide.

Moreover, as the acrylic monomer, there may be used an acrylic monomer having a functional group other than the hydroxyl group. Examples of the functionaol group other than the hydroxyl group include a carboxyl group, an amide bond group, an amino group, and an alkylene oxide group.

It is preferred that the vinyl chloride acrylic copolymer resin described above have a mass average molecular weight of from 10,000 to 70,000. Moreover, in view of solubility to a solvent in consideration of an environment as the organic solvent and adhesiveness with respect to a base material, it is preferred that the vinyl chloride acrylic copolymer have 50 to 200 hydroxyl groups.

It is preferred that a total content of a polyurethane resin having an amine value of from 1 to 13 and having a primary amino group or a secondary amino group at a terminal thereof, a vinyl chloride/vinyl acetate-based copolymer, and a vinyl chloride acrylic copolymer resin be from 5 mass% to 20 mass% in the flexible package laminate print ink composition.

### (Gun Cotton and Cellulose Acetate Propionate Resin)

The ink composition of this embodiment may be used together with gun cotton and a cellulose acetate propionate resin in order to improve the blocking resistance.

As the gun cotton, gun cotton having hitherto been used for the gravure print ink composition may be used. The gun cotton is obtained by causing a reaction of a natural cellulose and a nitric acid and replacing three hydroxyl groups among a six-membered ring of anhydrous glucopyranose group in the natural cellulose with a nitric acid group to form a nitric acid ester. It is preferred that the gun cotton which may be used in this embodiment have a nitrogen amount of from 10 to 13% and an average polymerization degree of from 35 to 90. Specific examples of the gun cotton include SS1/2, SS1/4, SS1/8, TR1/16, and NC RS-2 (manufactured by KCNC, KOREA CNC LTD.).

It is preferred that the gun cotton be contained in the ink composition by from 0.1 mass% to 2.0 mass%.

As the cellulose acetate propionate resin, a cellulose acetate propionate resin having hitherto been used for the gravure print ink composition is used. The cellulose acetate propionate resin can be obtained by subjecting the cellulose to triesterification with an acetic acid and a pripionic acid and then to hydrolysis. In general, a resin with acetylation of from 0.6 weight% to 2.5 weight%, propionation of from 42 weight% to 46 weight%, and a hydroxyl group of from 1.8% to 5% is commercially available. Specific examples of the cellulose acetate propionate resin include cellulose acetate propionate manufactured by KANTO KAGAKU.

It is preferred that the cellulose acetate propionate resin be contained in the print ink composition by from 0.1 mass% to 3.0 mass%.

### <Other binder resin>

Further, with regard to the ink composition according to this embodiment, as other binder resin, in consideration of a range of not degrading the performance and cost, there may be auxiliarily added a cellulose acetate butyrate resin, an acrylic resin, a polyamide resin, rosin, a rosin derivative, or a sticky resin.

### (Organic solvent)

The organic solvent is blended so as to dissolve the pigment and the binder resin. The organic solvent is not particularly limited. For example, the organic solvent may be a toluene or ketone-based organic solvent (for example, acetone, methylethyl ketone, or methylisobutyl ketone), an ester-based organic solvent (for example, methyl acetate, ethyl acetate, n-propyl acetate, n-butyl acetate, or isobutyl acetate), an alcohol-based organic solvent (for example, methanol, ethanol, n-propanol, isopropanol, or butanol), and a hydrocarbon-based solvent (for example, toluene or methylcyclohexane). Among those, in consideration of measures against environmental problems and printability or dryness of an ink, it is preferred that the organic solvent be a mixed solvent of an ester-based organic solvent and an alcohol-based organic solvent. In this case, a use ratio of the ester-based organic solvent to the alcohol-based organic solvent be within the range of ester-based organic solvent/alcohol-based organic solvent=50/50 to 95/5.

It is preferred that, from the viewpoint of excellent printability of the ink composition to be obtained, a content of the organic solvent in the ink composition be 15 mass% or more. Moreover, it is preferred that a use amount of the organic solvent be 90 mass% or less. When the use amount of the organic solvent is less than 15 mass%, the ink composition is liable to be poor in printability. Meanwhile, when the use amount of the organic solvent exceeds 90 mass%, a printed product to be obtained is liable to be insufficient in coloring. In this case, it is preferred that the organic solvent include propyl acetate. It is preferred that the propyl acetate be included in the ink composition by 5.0 mass% or more, more preferably 10.0 mass% or more.

### (Optional component)

According to this embodiment, there may be suitably blended various additives such as a tackifier, a crosslinking agent, a lubricant, an anti-blocking agent, a charge preventing agent, a surfactant, a chelating agent, and a hard resin to the ink composition.

The manufacturing method for the ink composition according to this embodiment is not particularly limited. For example, the ink composition may be prepared by a method of mixing a pigment, a binder resin, an organic solvent, and various optional components and thereafter kneading with use of a kneader such as a bead mill, a ball mill, a sand mill, an attritor, a roll mill, or a pearl mill.

The obtained ink composition is adjusted so as to have a viscosity of from 10 mPa·s to 1,000 mPa·s. It is preferred that the ink composition be diluted with an organic solvent, when used for gravure printing, at an atmospheric temperature at the time of printing, so as to have an appropriate viscosity in accordance with the print condition, specifically, the flow-out time of a Zahn cup 3 reaches from 12 to 23 seconds/25°C, from 14 to 16 seconds/25°C at the time of high-speed printing.

The obtained ink composition may be printed, by a gravure print method, onto an adherend such as a plastic film for various flexible packages for back printing. As the plastic film, in particular, in view that integral printing with a package material can be performed, examples thereof include extension and non-extension polyolefin such as polyethylene or polypropylene, polyester, nylon, cellophane, and vinylon. The obtained printed product is formed into a bag, and subjected to lamination by various lamination methods, and is to be used for a packaging for food. As the lamination method for the packaging back, a lamination method of coating with an anchorcoat agent on a surface of the printed product and thereafter laminating a melting polymer, and a dry lamination method of coating with an adhesive on a surface of a printed product and thereafter attaching the polymer on the film.

As described above, according to this embodiment, the polyurethane resin included in the binder resin includes the biomass polyurethane resin. Such biomass polyurethane resin is a biomass polymer, and is an industrial resource which is not an exhaustible resource, thereby being capable of contributing to prevention of global warming and reduction in environmental load as compared to the case of using other exhaustible resource. Moreover, the polyurethane resin includes, at a terminal thereof, at least one of a primary amino group and a secondary amino group. Such ink composition including the polyurethane resin is, when printed on a flexible package, excellent in laminate suitability of a printed product to be obtained. Moreover, the polyurethane resin includes a biomass polyurethane resin including the organic acid having three or more active hydrogen groups, each having a molecular weight equal to or less than 300. Such ink composition including the polyurethane resin is, when printed on a flexible package, improved in resistance of a product to be obtained, and hence is excellent in blocking resistance and laminate suitability.

In the above, description is made of one embodiment of the first invention. The first invention is not especially limited to the embodiment described above. The embodiment described above mainly describes the first invention having the following configuration.
(1) A flexible package laminate print ink composition, comprising: a pigment; a binder resin; and an organic solvent, wherein the binder resin includes a polyurethane resin, wherein the polyurethane resin includes a biomass polyurethane resin obtained by a reaction of a biopolyester polyol component and an organic diisocyanate component, and includes, at a terminal thereof, at least one of a primary amino group and a secondary amino group, wherein the biopolyester polyol component is a reaction product of a dicarboxylic acid and diol, and does not include an organic acid having three or more active hydrogen groups each having a molecular weight of equal to or less than 300 in one molecule, or includes the organic acid so as to be equal to or less than 3,000 ppm with respect to the dicarboxylic acid, and at least one of the dicarobxylic acid and the diol is plant-derived, wherein a ratio of an NCO group of the organic diisocyanate component to an OH group of a polyester polyol component in the polyurethane resin is NCO group/OH group=1.2 to 3.0, and wherein a content of the biomass polyurethane resin in the polyurethane resin is 5 mass% to 100 mass%.
   According to such configuration, the polyurethane resin included in the binder resin includes the biomass polyurethane resin. Such biomass polyurethane resin is a biomass polymer, and is an industrial resource which is not an exhaustible resource, thereby being capable of contributing to prevention of global warming and reduction in environmental load as compared to the case of using other exhaustible resource. Moreover, the polyurethane resin includes, at a terminal thereof, at least one of a primary amino group and a secondary amino group. Such ink composition including the polyurethane resin has good pigment dipersibility, and is, when printed on a flexible package, excellent in laminate suitability of a printed product to be obtained. Moreover, the polyurethane resin includes a biomass polyurethane resin which is obtained by a reaction of the dicarboxylic acid and the diol, further suitably includes an organic acid, and the biopolyester polyol component and the organic diisocyanate component in which at least one of the dicarboxylic acid and the diol is plant-derived is included. Such ink composition including the polyurethane resin is, when printed on a flexible package, improved in resistance of a product to be obtained, and hence is excellent in blocking resistance and laminate suitability.
(2) The flexible package laminate print ink composition according to (1), wherein the biopolyester polyol component is biopolyester polyol obtained by a reaction of a plant-derived short-chain diol component, an organic acid component having three or more active hydrogen groups, each having a molecular weight equal to or less than 300 in one molecule, and a plant-derived carboxylic acid component.
   According to such configuration, the ink composition including the biomass polyurethane resin is increased in biomass component, thereby being capable of contributing to prevention of global warming and reduction in environmental load.
(3) The flexible package laminate print ink composition according to (2), wherein the plant-oil-derived dicarboxylic acid component is at least one selected from the group consisting of a sebacic acid, a succinic acid, and a dimer acid, and wherein the organic acid including three or more active hydrogen groups in one molecule is a malic acid.
   According to such configuration, the ink composition including the biomass polyurethane resin is, when printed on a flexible package, more excellent in blocking resistance and laminate suitability of a printed product to be obtained.
(4) The flexible package laminate print ink composition according to (2) or (3), wherein the isocyanate component is plant-derived bioisocyanate.
   According to such configuration, the flexible package laminate print ink composition is capable of contributing to prevention of global warming and reduction in environmental load as compared to the case of using other exhaustible resource.
(5) The flexible package laminate print ink composition according to any one of (1) to (4), wherein the biomass polyurethane resin and a polyurethane resin other than the biomass polyurethane resin include, at a terminal thereof, at least one of a primary amino group and a secondary amino group.
   According to such configuration, the ink composition including such biomass polyurethane resin is excellent in pigment dispersibility, and is, when printed on a flexible package, particularly excellent in laminate suitability of a printed product to be obtained.
(6) The flexible package laminate print ink composition according to any one of (1) to (5), further comprising at least one compound selected from the group consisting of a vinyl chloride/vinyl acetate copolymer having a hydroxyl group, a gun gotton, and a cellulose acetate propionate resin.

According to such configuration, the flexible package laminate print ink composition is, when printed on a flexible package, particularly excellent in blocking resistance of a printed product to be obtained.

### [Embodiment related to second invention]

### <Flexible Package Laminate Print Ink Composition>

A flexible package laminate print ink composition (hereinafter also referred to as "ink composition") according to one embodiment of the present invention mainly includes a pigment, a binder resin, and an organic solvent. Now, description is made of each of those elements.

### (Pigment)

Examples of a pigment include an inorganic pigment, an organic pigment, and an extender pigment, which are generally used in an ink composition comprising an organic solvent. Examples of the inorganic pigment include titanium oxide, red iron oxide, antimony red, cadmium red, cadmium yellow, cobalt blue, iron blue, ultramarine blue, carbon black, graphite and the like. Examples of the organic pigment include a soluble azo pigment, an insoluble azo pigment, an azo lake pigment, a condensation azo pigment, a copper phthalocyanine pigment, a polycyclic condensed pigment and the like. Examples of the extender pigment include calcium carbonate, kaolin clay, barium sulfate, aluminum hydroxide, talc and the like.

A content of the pigment is not particularly limited. As one example, the pigment is contained in the ink composition so as to be from 0.5 mass% to 50 mass%. When the content of the pigment is less than 0.5 mass%, coloring is liable to be insufficient. Meanwhile, when the content of the pigment exceeds 50 mass%, a printability is liable to be insufficient.

### (Binder Resin)

The binder resin includes a polyurethane resin. The polyurethane resin includes a biomass polyurethane resin. Moreover, the polyurethane resin according to this embodiment includes, at a terminal thereof, at least one of a primary amino group and a secondary amino group. Through inclusion of such binder resin, the ink composition according to this embodiment is reduced in viscosity of the resin. Therefore, the ink composition is improved in pigment dispersibility, thereby being capable of increasing the pigment concentration in the ink composition. As a result, the ink composition can also be printed through use of a shallow plate. Through the use of the shallow plate, a required solvent amount is reduced. Thus, the ink composition according to this embodiment may further reduce an environmental load.

The polyurethane resin is a polyurethane resin including, at a terminal thereof, at least one of a primary amino group and a secondary amino group, which is obtained by a reaction of a polyurethane prepolymer obtained by a reaction of a high molecular diol and polyisocyanate and having an isocyanate group at a terminal thereof and a polyamine compound including, at a terminal thereof, at least one of a primary amino group and a secondary amino group. As descried above, the polyurethane resin including, at a terminal thereof, at least one of a primary amino group and a secondary amino group is very high in a pigment dispersion effect as compared to a binder resin used for a general ink composition, and even when the pigment concentration in the ink composition is set high, a film cohesion of the ink composition is not degraded. Therefore, the ink composition comprising such polyurethane resin may exhibit, even when a print plate formed into a shallow plate is to be used, favorable print concentration, printability, and laminate suitability. It is preferred that the amino group of the terminal be the primary amino group since more favorable print concentration, printability, and laminate suitability re exhibited.

The primary amino group or the secondary amino group may be included in the biomass polyurethane resin included in the polyurethane resin of this embodiment, or may be included in a polyurethane resin other than the biomass polyurethane resin. The ink composition according to this embodiment is, when printed on a flexible package, excellent in pigment dispersibility, printability, and laminate suitability of a printed product to be obtained, and hence it is preferred that 20% or more, particularly preferably all of terminals of the biomass polyurethane resin and a plolyurethane resin other than the biomass polyurethane resin include the primary amino group or the secondary amino group.

A manufacturing method for the polyurethane resin including, at the terminal thereof, the primary amino group or the secondary amino group is not particularly limited. For example, such polyurethane resin may be obtained by the following methods (1) to (4).
(1) A method of obtaining a polyurethane resin having a primary amino group or a secondary amino group in the following manner. A chain extender is added to a urethane prepolymer obtained by a reaction of high molecular diol and polyisocianate and having an isocyanate group at a terminal thereof to cause chain extension and obtain a urethane prepolymer having an isocyanate group at a terminal thereof. After that, a reaction terminator which is other than a polyamine compound having the primary amino groups or the secondary amino groups at both terminals thereof is caused to react. Next, a reaction terminator which is a polyamine compound having the primary amino groups or the secondary amino groups at both terminals thereof is caused to react.
(2) A method of obtaining a polyurethane resin having a primary amino group or a secondary amino group in the following manner. A chain extender is added to a urethane prepolymer obtained by a reaction of high molecular diol and polyisocianate and having an isocyanate group at a terminal thereof to cause chain extension and obtain a urethane prepolymer having an isocyanate group at a terminal thereof. After that, as reaction terminators, a reaction terminator other than a polyamine compound having the primary amino groups or the secondary amino groups at both terminals thereof and a reaction terminator which is a polyamine compound having the primary amino groups or the secondary amino groups at both terminals thereof are simultaneously added to cause a reaction simultaneously.
(3) A method of obtaining a polyurethane resin having a primary amino group or a secondary amino group in the following manner. A chain extender is added to a urethane prepolymer obtained by a reaction of high molecular diol and polyisocianate and having an isocyanate group at a terminal thereof to cause chain extension and obtain a urethane prepolymer having an isocyanate group at a terminal thereof. After that, as a reaction terminator, a polyamine compound having primary amino groups or secondary amino groups at both terminals thereof is caused to react to bring chain extension and reaction termination to effect simultaneously.
(4) A method of obtaining a polyurethane resin having a primary amino group or a secondary amino group in the following manner. A polyamine compound having primary amino groups or secondary amino groups at both terminals thereof is caused to react with a urethane prepolymer obtained by a reaction of high molecular diol and polyisocianate and having an isocyanate group at a terminal thereof to bring chain extension and reaction termination to effect simultaneously.

The polyisocyanate to be used for those methods is not particularly limited. For example, the polyisocyanate is obtained by mixing an aromatic diisocyanate compound such as tolylene diisocyanate, an alicyclic diisocyanate compound such as 1,4-cyclohexane diisocyanate or isophorone diisocyanate, an aliphatic diisocyanate compound such as hexamethylene diisocyanate, and an aliphatic-aromatic diisocyanate compound such as α,α,α',α'-tetramethyl xylilenediisocyanate.

The high molecular diol compound to be used for those methods is not particularly limited. For example, the high molecular diol compound is a high molecular diol compound among various types such as polyester diols or polycaprolactone diols, which are obtained by a condensation reaction of polyalkylene glycols such as polyethylene glycol and polypropylene glycol, a polyether diol compound such as an alkylene oxide addition product, for example, ethylene oxide of bisphenol A or propylene oxide, a dibasic acid such as an adipic acid, a sebacic acid, or phthalic anhydride, and glycols such as ethylene glycol, propylene glycol, 1,4-butane diol, neopentylglycol, or 3-methyl-1,5-pentane diol.

Those high molecular diol compounds may be used together with alkane diol such as 1,4-pentane diol, 2,5-hexane diol, or 3-methyl-1,5-pentane diol, and a low molecular diol compound such as ethylene glycol, propylene glycol, 1,4-butane diol, or 1,3-butane diol.

A blend ratio of the polyisocyanate and the high molecular diol compound is not particularly limited. For example, it is preferred that, with regard to the blend ratio, an equivalence ratio (isocyanate index) of isocyanate group:hydroxyl group be from 1.2:1 to 3.0:1, more preferably from 1.3:1 to 2.0:1. When the isocyanate index is less than 1.2, the polyurethane resin is more liable to be flexible. As a result, the ink composition is liable to be degraded in blocking resistance at the time of printing.

The chain extender to be used for the methods (1) to (3) described above is not particularly limited. Examples of the chain extender include: aliphatic diamines such as ethylenediamine, propylenediamine, tetramethylenediamine, and hexamethylenediamine; alicyclic diamines such as isophorone diamine and 4,4'-dicyclohexyl methanediamine; polyamines such as diethylenetriamine and triethylenetetratriamine; aromatic diamines such as toluylenediamine; aliphatic-aromatic diamines such as xylenediamine; diamines having a hydroxyl group such as N-(2-hydroxyethyl)ethylenediamine, N-(2-hydroxyethyl)propylenediamine, and N,N'-di(2-hydroxyethyl)ethylenediamine; and diol compounds such as ethylene glycol, propylene glycol, 1,4-butane diol, neopentyl glycol, diethylene glycol, and triethylene glycol.

The reaction terminator to be used for the methods (1) and (2) described above is not particularly limited. Examples of the reaction terminator include: a polyamine compound having primary amino groups or secondary amino groups at both terminals thereof; and a reaction terminator such as a monoamine compound or a monoalcohol compound. The reaction terminator to be used for the method (3) described above is not particularly limited. As one example, the reaction terminator is a polyamine compound having primary amino groups or secondary amino groups at both terminals thereof. The compound for simultaneously causing the chain extension and the reaction termination to be used for the method (4) described above is not particularly limited. The compound may be only the chain extender described above, or the chain extender and the reaction terminator may be used together.

The polyurethane resin having the amino group is excellent in storage stability and pigment dispersibility, and hence it is preferred that the polyurethane resin be subjected to reaction termination with the polyamine compound having primary amino groups or secondary amino groups at both terminals thereof so as to have an amine value of from 1 mgKOH/g to 13 mgKOH/g.

The polyamine compound having primary amino groups or secondary amino groups at both terminals thereof is not particularly limited. Examples of the polyamine compound include: aliphatic diamines such as ethylenediamine, propylenediamine, tetramethylenediamine, and hexamethylenediamine; alicyclic diamines such as isophorone diamine and 4,4'-dicyclohexyl methanediamine; polyamines such as diethylenetriamine and triethylenetetratriamine; aromatic diamines such as toluylenediamine; aliphatic-aromatic diamines such as xylenediamine; and diamines having a hydroxyl group such as N-(2-hydroxyethyl)ethylenediamine and N-(2-hydroxyethyl)propylenediamine.

Such reaction terminator which may be used together with the polyamine compound having primary amino groups or secondary amino groups at both terminals thereof is not particularly limited. Examples of the reaction terminator include a monoamine compound and a monoalcohol compound, which are known reaction terminators. Specifically, examples of the reaction terminator include: monoalkylamines such as n-propylamine and n-butylamine; dialkylamines such as di-n-butylamine; alkanolamines such as monoethanolamine and diethanolamine; and monoalcohols such as ethanol.

In this embodiment, it is only required that molecular weights, chemical structures, and equivalence ratios of the components be suitably adjusted based on, for example, a desired hardness of the polyurethane resin and the like.

It is preferred that a number-average molecular weight of the polyurethane resin in this embodiment be 10,000 or more. Moreover, it is preferred that a number-average molecular weight of the polyurethane resin be 70,000 or less, more preferably 50,000 or less.

A content of the polyurethane resin in this embodiment is not particularly limited. As one example, it is preferred that the content of the polyurethane resin be 5 mass% or more, more preferably 20 mass% or more in the ink composition. When the content of the polyurethane resin is less than 5 mass%, the ink composition is liable to be degraded in pigment dispersibility. On the other hand, when the content of the polyurethane resin exceeds 20 mole%, a viscosity of the ink composition tends to increase. When the polyurethane resin is contained within the range of the content described above, the ink composition to be obtained may exhibit, even when printed through use of a plate cylinder formed into a shallow plate, favorable print concentration, printability, and laminate suitability similar to the related-art ink composition.

Next, description is made of the biomass polyurethane resin included in the polyurethane resin in this embodiment. With regard to description of the biomass polyurethane resin, description in common with the polyurethane resin described above is suitably omitted.

The biomass polyurethane resin is a polyurethane resin including a biomass-derived (plant-derived) component. In this embodiment, it is preferred that the biomass polyurethane resin be obtained by a reaction of the biopolyol component and the isocyanate component, and is more preferred that the isocyanate component is a plant-derived bioisocyanate, since the biomass polyurethane resin is capable of contributing to prevention of global warming and reduction in environmental load more than the case of using other exhaustible resource.

It is preferred that the biopolyol component be a biopolyester polyol obtained by a reaction of a short-chain diol component having 2 to 4 carbon atoms and a carboxylic acid component. It is preferred that, in the biopolyol component, at least one of the short-chain diol component and the carboxylic acid component be plant-derived. It is more preferred that both be plant-derived.

The plant-derived short-chain diol component having 2 to 4 carbon atoms is not particularly limited. For example, the short-chain diol component may be 1,3-propane diol, 1,4-butane diol, ethylene glycol or the like obtained from a plant raw material by the following method. Those may be used together.

The 1,3-propane diol may be manufactured, by a fermentation process of dissolving a plant resource (for example, corn) to obtain glucose, from glycerol through 3-hydroxypropyl aldehyde (HPA). The 1,3-propane diol compound manufactured by the bio process like the fermentation process described above, as compared to 1,3-propane diol compound obtained by an EO manufacturing process, a byproduct such as a lactic acid useful in terms of safety can be obtained, and manufacturing cost can be suppressed. The 1,4-butane diol can be manufactured by obtaining a succinic acid obtained through manufacture and fermentation of glycol from a plant resource and adding water thereto. Moreover, the ethylene glycol may be manufactured through ethylene from bioethanol obtained by a normal process.

The plant-derived carboxylic acid component is not particularly limited. Examples of the dicarboxylic acid component include a sebacic acid, a succinic acid, a lactic acid, a glutaric acid, and a dimer acid. Those may be used together. Among those, it is preferred that the dicarboxylic acid component includes at least one selected from the group consisting of a sebacic acid, a succinic acid, and a dimer acid.

The biopolyol component may be obtained as a wholly plant-derived biopolyester polyor through suitable condensation reaction of the plant-derived short-chain diol component and the plant-derived carboxylic acid component. Specifically, through direct dehydration condensation of the plant-derived sebacic acid and the plant-derived 1,3-propane diol, polytrimethylene sebasate polyol can be obtained. Moreover, through direct dehydration condensation of the plant-derived succinic acid and the plant-derived 1,4-butane diol, polybutylene succinate polyol can be obtained. Those may be used together.

It is preferred that, in terms of environment, the biomass polyurethane resin be contained in the polyurethane resin by 10 mass% or more in a solid content conversion, more preferably 40 mass% or more, and yet more preferably 100 mass%.

Returning to the overall description of the binder resin, with regard to the binder resin in this embodiment, it is preferred that, in addition to the polyurethane resin, a vinyl chloride/vinyl acetate copolymer, a vinyl chloride acrylic copolymer, gun cotton, a cellulose acetate propionate resin, and other binder resin be used together with the binder resin.

### (Vinyl chloride/vinyl acetate-based copolymer and vinyl chloride acrylic copolymer)

In a case in which the pigment is not sufficiently disperse by only including the polyurethane resin, or in a case of improving the adhesiveness or laminate suitability of a metal deposition film or the like, it is preferred that the ink composition include a vinyl chloride/vinyl acetate-based copolymer and/or a vinyl chloride acrylic copolymer to be used together.

As the vinyl chloride/vinyl acetate copolymer, there may be used a vinyl chloride/vinyl acetate copolymer which is manufactured by a conventionally known method with a vinyl chloride monomer and a vinyl acetate monomer having hitherto been used for a gravure print ink composition as essentially required components and, as needed, with a fatty acid vinyl monomer such as vinyl propionate, vinyl monochlororate, vinyl versatate, vinyl laurate, vinyl stearate, and vinyl benzoate and a monomer having a functional group such as a hydroxyl group.

Among those, with regard to the vinyl chloride/vinyl acetate-based copolymer, for an organic solvent of an ink in consideration of an environment, it is favorable to employ a vinyl chloride/vinyl acetate-based copolymer having a hydroxyl group, preferably, 50 to 200 hydroxyl groups. Such vinyl chloride/vinyl acetate-based copolymer having a hydroxyl group can be obtained by subjecting part of an acetic ester portion to saponification and introducing a (meth)acrylic monomer having a hydroxyl group.

In the case of the vinyl chloride/vinyl acetate-based copolymer having a hydroxyl group obtained by subjecting part of the acetic ester portion to saponification, a film physical property and a dissolution behavior of the resin is determined based on a ratio of a constituting unit based on a reaction part of vinyl chloride in a molecule (following Formula 1), a constituting unit based on a reaction part of vinyl acetate (following Formula 2), and a constituting unit based on saponification of a reaction part of vinyl acetate (following Formula 3). That is, the constituting unit based on the reaction part of the vinyl chloride gives a strength and a hardness of the resin film, the constituting unit based on a reaction part of vinyl acetate gives an adhesiveness and a flexibility, and the constituting unit based on saponification of a reaction part of vinyl acetate gives a favorable solubility to an organic solvent of an ink in consideration of the environment.

Formula 1 -CH₂-CHCl-

Formula 2 -CH₂-CH(OCOCH₃)-

Formula 3 -CH₂-CH(OH)-

Such vinyl chloride/vinyl acetate-based copolymerresin may be the one which is commercially available, and examples thereof include Solbin A, AL, TA5R, TA2, TA3, TAO, TAOL, C, CH, CN, and CNL manufactured by Nissin Chemical co., ltd.

In view of the solubility with respect to an organic solvent used for the flexible package laminate print ink composition according to the present invention and print suitability, the vinyl chloride/vinyl acetate-based copolymer resin described above may have various functional groups in a molecule.

Moreover, when a solvent in consideration of an environment is to be used as the organic solvent, it is preferred that the vinyl chloride/vinyl acetate-based copolymer described above have 50 to 200 hydroxyl groups. As a commercially available product of such vinyl chloride/vinyl acetate-based copolymer, it is preferred that, for example, Solbin A, AL, TA5R, TA2, TA3, TAO, and TAOL be used. Specific examples of such vinyl chloride/vinyl acetate-based copolymer having a hydroxyl group include Solbin A, AL, TA5R, TA2, TA3, TAO, TAOL, C, CH, CN, and CNL manufactured by Nissin Chemical Co., Ltd.

As the vinyl chloride acrylic copolymer, there may be provide the one including a copolymer of vinyl chloride and an acrylic monomer as a main component. A mode of the copolymer is not particularly limited. For example, the acrylic monomer may be incorporated to a main chain of polyvinyl chloride in a block or in a randam form, or may be copolymerized to a side chain of the polyvinyl chloride.
As an acrylic monomer, there may be used, for example, a (meth)acrylic ester and an acrylic monomer having a hydroxyl group. Examples of the (meth)acrylic ester include a (meth)acrylic alkyl ester. The alkyl group may be any of straight chain, branched, and annular. Howevever, it is preferred that the alkyl group be a straight chain alkyl group. Examples of the acrylic monomer include methyl (meth)acrylate, ethyl (meth)acrylate, propyl (meth)acrylate, buytl (meth)acrylate, pentyl (meth)acrylate, hexyl (meth)acrylate, cyclohexyl (meth)acrylate, 2-ethylhexyl (meth)acrylate, isooctyl (meth)acrylate, decyl (meth)acrylate, dodecyl (meth)acrylate, tetradecyl (meth)acrylate, hexadecyl (meth)acrylate, and octadecyl (meth)acrylate. Examples of the acrylic monomer having a hydroxyl group include: hydroxyalkyl (meth)acrylates such as 2-hydroxyethyl (meth)acrylate, 2-hydroxypropyl (meth)acrylate, 3-hydroxypropyl (meth)acrylte, 2-hydroxybutyl (meth)acrylate, 3-hydroxybutyl (meth)acrylate, 4-hydroxybutyl (meth)acrylate, 6-hydroxyhexyl (meth)acrylate, and 8-hydroxyoctyl (meth)acrylate; glycol mono(meth)acrylates such as polyethylene glycol mono(meth)acrylate, polypropylene glycol mono(meth)acrylate, and 1,4-cyclohexanedimethanol mono(meth)acrylate; caprolactone-modified (meth)acrylate; and hydroxyethyl acrylamide.

Moreover, as the acrylic monomer, there may be used an acrylic monomer having a functional group other than the hydroxyl group. Examples of the functionaol group other than the hydroxyl group include a carboxyl group, an amide bond group, an amino group, and an alkylene oxide group.

It is preferred that the vinyl chloride acrylic copolymer resin described above have a mass average molecular weight of from 10,000 to 70,000. Moreover, in view of solubility to a solvent in consideration of an environment as the organic solvent and adhesiveness with respect to a base material, it is preferred that the vinyl chloride acrylic copolymer have 50 to 200 hydroxyl groups.

It is preferred that a total content of a polyurethane resin having an amine value of from 1 to 13 and having a primary amino group or a secondary amino group at a terminal thereof, a vinyl chloride/vinyl acetate-based copolymer, and a vinyl chloride acrylic copolymer resin be from 5 mass% to 20 mass% in the flexible package laminate print ink composition.

### (Gun Cotton and Cellulose Acetate Propionate Resin)

The flexible package laminate print ink composition of this embodiment may be used together with gun cotton and a cellulose acetate propionate resin in order to improve the blocking resistance.

It is preferred that the gun cotton be contained in the flexible package laminate print ink composition by from 0.1 mass% to 2.0 mass%. It is preferred that the cellulose acetate propionate resin be contained in the flexible package laminate print ink composition by from 0.1 mass% to 3.0 mass%.

### <Gun Cotton>

As the gun cotton, gun cotton having hitherto been used for the gravure print ink composition may be used. The gun cotton is obtained by causing a reaction of a natural cellulose and a nitric acid and replacing three hydroxyl groups among a six-membered ring of anhydrous glucopyranose group in the natural cellulose with a nitric acid group to form a nitric acid ester. It is preferred that the gun cotton which may be used in this embodiment have a nitrogen amount of from 10 to 13% and an average polymerization degree of from 35 to 90. Specific examples of the gun cotton include SS1/2, SS1/4, SS1/8, TR1/16, and NC RS-2 (manufactured by KCNC, KOREA CNC LTD).

### <Cellulose Acetate Propionate Resin>

As the cellulose acetate propionate resin, a cellulose acetate propionate resin having hitherto been used for the gravure print ink composition can be used.

The cellulose acetate propionate resin can be obtained by subjecting the cellulose to triesterification with an acetic acid and a pripionic acid and then to hydrolysis. In general, a resin with acetylation of from 0.6 weight% to 2.5 weight%, propionation of from 42 weight% to 46 weight%, and a hydroxyl group of from 1.8% to 5% is commercially available. Specific examples of the cellulose acetate propionate resin include cellulose acetate propionate manufactured by KANTO KAGAKU.

### <Other binder resin>

Further, with regard to the ink composition according to this embodiment, as other binder resin, in consideration of a range of not degrading the performance and cost, there may be auxiliarily added a cellulose acetate butyrate resin, an acrylic resin, a polyamide resin, rhodine, a rhodine derivative, or a sticky resin.

### (Organic solvent)

The organic solvent is blended so as to dissolve the pigment and the binder resin. The organic solvent is not particularly limited. For example, the organic solvent may be a toluene or ketone-based organic solvent (for example, acetone, methylethyl ketone, or methylisobutyl ketone), an ester-based organic solvent (for example, methyl acetate, ethyl acetate, n-propyl acetate, n-butyl acetate, or isobutyl acetate), an alcohol-based organic solvent (for example, methanol, ethanol, n-propanol, isopropanol, or butanol), and a hydrocarbon-based solvent (for example, toluene or methylcyclohexane). Among those, in consideration of measures against environmental problems and print suitability or dryness of an ink, it is preferred that the organic solvent be a mixed solvent of an ester-based organic solvent and an alcohol-based organic solvent. In this case, a use ratio of the ester-based organic solvent to the alcohol-based organic solvent be within the range of ester-based organic solvent/alcohol-based organic solvent=50/50 to 95/5.

It is preferred that, from the viewpoit of excellent printability of the ink composition to be obtained, a content of the organic solvent in the ink composition be 15 mass% or more. Moreover, it is preferred that a use amount of the organic solvent be 90 mass% or less. When the use amount of the organic solvent is les than 15 mass%, the ink composition is liable to be poor in print suitability. Meanwhile, when the use amount of the organic solvent exceeds 90 mass%, sufficient coloring tends not to be obtained. In this case, it is preferred that the organic solvent include propyl acetate. It is preferred that the propyl acetate be included in the ink composition by 5.0 mass% or more, more preferably 10.0 mass% or more.

### (Optional component)

According to this embodiment, there may be suitably blended various additives such as a tackifier, a crosslinking agent, a lubricant, an anti-blocking agent, a charge preventing agent, a surfactant, a chelating agent, and a hard resin to the ink composition.

The manufacturing method for the ink composition according to this embodiment is not particularly limited. For example, the ink composition may be prepared by a method of mixing a pigment, a binder resin, an organic solvent, and various optional components and thereafter kneading with use of a kneader such as a bead mill, a ball mill, a sand mill, an attritor, a roll mill, or a pearl mill.

A viscosity of the obtained ink composition is from 10 mPa· s to 1,000 mPa·s. It is preferred that the ink composition be diluted with an organic solvent, when used for gravure printing, at an atmospheric temperature at the time of printing, so as to have an appropriate viscosity in accordance with the print condition, specifically, the flow-out time of a Zahn cup 3 reaches from 12 to 23 seconds/25°C, from 14 to 16 seconds/25°C at the time of high-speed printing.

The obtained ink composition may be printed, by a gravure print method, onto an adherend such as a plastic film for various flexible packages for front printing. As the plastic film, in particular, in view that integral printing with a package material can be performed, examples thereof include extension and non-extension polyolefin such as polyethylene or polypropylene, polyester, nylon, cellophane, and vinylon. The obtained printed product is formed into a bag, and subjected to lamination by various lamination methods, and is to be used for a packaging for food. As the lamination method for the packaging back, a lamination method of coating with an anchorcoat agent on a surface of the printed product and thereafter laminating a melting polymer, and a dry lamination method of coating with an adhesive on a surface of a printed product and thereafter attaching the polymer on the film.

As described above, according to this embodiment, the polyurethane resin included in the binder resin includes the biomass polyurethane resin. Such biomass polyurethane resin is a biomass polymer, and is an industrial resource which is not an exhaustible resource, thereby being capable of contributing to prevention of global warming and reduction in environmental load as compared to the case of using other exhaustible resource. Moreover, the polyurethane resin includes, at a terminal thereof, at least one of a primary amino group and a secondary amino group. Such ink composition including the polyurethane resin is, when printed on a flexible package, is excellent in laminate suitability of a printed product to be obtained.

In the above, description is made of one embodiment of the second invention. The secondfirst invention is not especially limited to the embodiment described above. The embodiment described above mainly describes the second invention having the following configuration.
(1) A flexible package laminate print ink composition, comprising: a pigment; a binder resin; and an organic solvent, wherein the binder resin includes a polyurethane resin, wherein the polyurethane resin includes a biomass polyurethane resin, and includes, at a terminal thereof, at least one of a primary amino group and a secondary amino group, wherein a content of the biomass polyurethane resin in the polyurethane resin is 10 mass% to 100 mass%.
   According to such configuration, the polyurethane resin included in the binder resin includes the biomass polyurethane resin. Such biomass polyurethane resin is a biomass polymer, and is an industrial resource which is not an exhaustible resource, thereby being capable of contributing to prevention of global warming and reduction in environmental load as compared to the case of using other exhaustible resource. Moreover, the polyurethane resin includes, at a terminal thereof, at least one of a primary amino group and a secondary amino group. The ink composition including such polyurethane resin is reduced in resin viscosity to have good pigment dipersibility, and is, when printed on a flexible package, excellent in laminate suitability of a printed product to be obtained.
(2) The flexible package laminate print ink composition according to (1), wherein the biomass polyurethane resin is a biomass polyurethane resin obtained by a reaction of a biopolyol component and an isocyanate component, and wherein the biopolyol component is a biopolyester polyol (B) obtained by a reaction of a plant-derived short-chain diol component having 2 to 4 carbon atoms and a plant-derived carboxylic acid component.
   According to such configuration, the ink composition including such biomass polyurethane resin is, when printed on a flexible package, more excellent in laminate suitability of a printed product to be obtained.
(3) The flexible package laminate print ink composition according to (2), wherein the carboxylic acid component is at least one selected from the group consisting of a sebacic acid, a succinic acid, and a dimer acid.
   According to such configuration, the ink composition including such biomass polyurethane resin is, when printed on a flexible package, more excellent in laminate suitability of a printed product to be obtained.
(4) The flexible package laminate print ink composition according to (2) or (3), wherein the isocyanate component is plant-derived bioisocyanate.
   According to such configuration, the flexible package laminate print ink composition is capable of contributing to prevention of global warming and reduction in environmental load as compared to the case of using another exhaustible resource.
(5) The flexible package laminate print ink composition according to any one of (1) to (4), wherein the biomass polyurethane resin and a polyurethane resin other than the biomass polyurethane resin includes, at a terminal thereof, at least one of a primary amino group and a secondary amino group.
   According to such configuration, the ink composition including such biomass polyurethane resin is, when printed on a flexible package, particularly excellent in laminate suitability of a printed product to be obtained.
(6) The flexible package laminate print ink composition according to any one of (1) to (5), further comprising at least one compound selected from the group consisting of a vinyl chloride/vinyl acetate copolymer having a hydroxyl group, a gun cotton, and a cellulose acetate propionate resin.

According to such configuration, the flexible package laminate print ink composition is, when printed on a flexible package, particularly excellent in blocking resistance of a printed product to be obtained.

### EXAMPLE

Now, specific description is made of the present invention with Examples. The present invention is not limited to those Examples. Unless otherwise particularly limited, "%" corresponds to "mass%", and "parts" corresponds to "parts by mass".

### [Examples related to first invention]

Used starting materials and preparation methods are described below.
Polyurethane resin varnish A: non-biomass polyurethane, amine value 3.2
Polyurethane resin varnish B: non-biomass polyurethane, amine value 0
Polyurethane resin varnish C: biomass polyurethane, sebacic acid, amine value 3.2, isocyanate index (hereinafter also refered to as "I.I")=1.6, malic acid 2,000 ppm
Polyurethane resin varnish D: biomass polyurethane, sebacic acid, amine value 3.2, I.I=1.6, malic acid 1,500 ppm
Polyurethane resin varnish E: biomass polyurethane, sebacic acid, amine value 1.6, I.I=1.6, malic acid 2,000 ppm
Polyurethane resin varnish F: biomass polyurethane, amine value 5.4, sebacic acid, I.I=1.6, malic acid 2,000 ppm
Polyurethane resin varnish G: biomass polyurethane, amine value 3.2, sebacic acid, I.I=1.5, malic acid 2,000 ppm
Polyurethane resin varnish H: biomass polyurethane, dimer acid, I.I=1.6, amine value 3.2, malic acid 2,000 ppm
Polyurethane resin varnish I: biomass polyurethane, sebacic acid/succinic acid, I.I=1.6, amine value 3.2, malic acid 2,000 ppm
Polyurethane resin varnish J: biomass polyurethane, sebacic acid, I.I=1.6, amine value 0, malic acid 2,000 ppm
Polyurethane resin varnish K: biomass polyurethane, sebacic acid, amine value 3.2, I.I=1.6
Polyurethane resin varnish L: biomass polyurethane, sebacic acid, amine value 3.2, I.I=1.6, malic acid 500 ppm

### <Preparation example of polyurethane resin varnish A (non-biomass polyurethane, amine value 3.2) >

In a four-mouth flask including a mixer, a cooling pipe, and a nitrogen gas introduction pipe, 200 parts by mass of 3-methyl-1,5-pentyleneadipate diol having an average molecular weight of 2,000 and 35.5 parts by mass of isophorone diisocyanate were poured, followed by 6-hour reaction at a temperature of from 100°C to 105°C while introducing nitrogen gas. Radiational cooling was peformed to a temperature close to a room temperature, and after adding 401 parts by mass of ethyl acetate and 172 parts by mass of isopropyl alcohol, 8.2 parts by mass of isophorone diamine was added to cause chain extension, and 0.35 part by mass of monoethanolamine was further added to cause a reaction. After that, 1.3 parts by mass of isophorone diamine and 0.6 part by mass of diethylenetriamine were added to cause reaction termination. As a result, polyurethane resin varnish A (solid content 30 mass%, amine value 3.2) was obtained.

### <Preparation example of polyurethane resin varnish B (non-biomass polyurethane, amine value 0)>

In a four-mouth flask including a mixer, a cooling pipe, and a nitrogen gas introduction pipe, 200 parts by mass of 3-methyl-1,5-pentyleneadipate diol having an average molecular weight of 2,000 and 35.5 parts by mass of isophorone diisocyanate were poured, followed by 6-hour reaction at a temperature of from 100°C to 105°C while introducing nitrogen gas. Radiational cooling was peformed to a temperature close to a room temperature, and after adding 407 parts by mass of ethyl acetate and 175 parts by mass of isopropyl alcohol, 9.2 parts by mass of isophorone diamine was added to cause chain extension. Further, 0.7 part by mass of monoethanolamine was added to cause reaction termination. As a result, polyurethane resin varnish B (solid content 30 mass%, amine value 0) was obtained.

### <Preparation example of polyurethane resin varnish C (biomass polyurethane, sebacic acid, amine value 3.2, 1.1=1.6, malic acid 2,000 ppm)>

In a four-mouth flask including a mixer, a cooling pipe, and a nitrogen gas introduction pipe, 200 parts by mass of polyester diol having an average molecular weight of 2,000 and obtained from 1,3-propanediol (plant-derived), sebacic acid (plant-oil-derived), malic acid (2,000 ppm with respect to the sebacicic acid) and 35.5 parts by mass of isophorone diisocyanate were poured, followed by 6-hour reaction at a temperature of from 100°C to 105°C while introducing nitrogen gas. Radiational cooling was peformed to a temperature close to a room temperature, and after adding 401 parts by mass of ethyl acetate and 172 parts by mass of isopropyl alcohol, 8.2 parts by mass of isophorone diamine was added to cause chain extension, and 0.35 part by mass of monoethanolamine was further added to cause a reaction. After that, 1.3 parts by mass of isophorone diamine and 0.6 part by mass of diethylenetriamine were added to cause reaction termination. As a result, polyurethane resin varnish C (solid content 30 mass%, amine value 3.2) was obtained.

### <Preparation example of polyurethane resin varnish D (biomass polyurethane, sebacic acid, amine value 3.2, 1.1=1.6, malic acid 1,500 ppm)>

In a four-mouth flask including a mixer, a cooling pipe, and a nitrogen gas introduction pipe, 200 parts by mass of polyester diol having an average molecular weight of 2,000 and obtained from 1,3-propanediol (plant-derived), sebacic acid (plant-oil-derived) and malic acid (1,500 ppm with respect to the sebacic acid) 35.5 parts by mass of isophorone diisocyanate were poured, followed by 6-hour reaction at a temperature of from 100°C to 105°C while introducing nitrogen gas. Radiational cooling was peformed to a temperature close to a room temperature, and after adding 401 parts by mass of ethyl acetate and 172 parts by mass of isopropyl alcohol, 8.2 parts by mass of isophoronediamine was added to cause chain extension, and 0.35 part by mass of monoethanolamine was further added to cause a reaction. After that, 1.3 parts by mass of isophorone diamine and 0.6 part by mass of diethylenetriamine were added to cause reaction termination. As a result, polyurethane resin varnish D (solid content 30 mass%, amine value 3.2) was obtained.

### <Preparation example of polyurethane resin varnish E (biomass polyurethane, sebacic acid, amine value 1.6, 1.1=1.6, malic acid 2,000 ppm)>

In a four-mouth flask including a mixer, a cooling pipe, and a nitrogen gas introduction pipe, 200 parts by mass of polyester diol having an average molecular weight of 2,000 and obtained from 1,3-propanediol (plant-derived), sebacic acid (plant-oil-derived) and malic acid (2,000 ppm with respect to the sebacic acid) and 35.5 parts by mass of isophorone diisocyanate were poured, followed by 6-hour reaction at a temperature of from 100°C to 105°C while introducing nitrogen gas. Radiational cooling was peformed to a temperature close to a room temperature, and after adding 401 parts by mass of ethyl acetate and 171 parts by mass of isopropyl alcohol were added, 8.2 parts by mass of isophorone diamine were added to cause chain extension, and 0.70 part by mass of monoethanolamine was further added to cause a reaction. After that, 0.65 part by mass of isophorone diamine and 0.39 part by mass of diethylenetriamine were added to cause reaction termination. As a result, polyurethane resin varnish E (solid content 30 mass%, amine value 1.6) was obtained.

### <Preparation example of polyurethane resin varnish F (biomass polyurethane, amine value 5.4, sebacic acid, 1.1=1.6, malic acid 2,000 ppm)>

In a four-mouth flask including a mixer, a cooling pipe, and a nitrogen gas introduction pipe, 200 parts by mass of polyester diol having an average molecular weight of 2,000 and obtained from 1,3-propanediol (plant-derived), sebacic acid (plant-oil-derived) and malic acid (2,000 ppm with respect to the sebacicic acid) and 35.5 parts by mass of isophorone diisocyanate were poured, followed by 6-hour reaction at a temperature of from 100°C to 105°C while introducing nitrogen gas. Radiational cooling was peformed to a temperature close to a room temperature, and after adding 403 parts by mass of ethyl acetate and 172 parts by mass of isopropyl alcohol, 8.2 parts by mass of isophorone diamine was added to cause chain extension. After that, 1.6 parts by mass of isophorone diamine and 1.0 part by mass of diethylenetriamine were added to cause reaction termination. As a result, polyurethane resin varnish F (solid content 30 mass%, amine value 5.4) was obtained.

### <Preparation example of polyurethane resin varnish G (biomass polyurethane, amine value 3.2, isocyanate ratio 1.5, malic acid 2,000 ppm)>

In a four-mouth flask including a mixer, a cooling pipe, and a nitrogen gas introduction pipe, 200 parts by mass of polyester diol having an average molecular weight of 2,000 and obtained from 1,3-propanediol (plant-derived), sebacic acid (plant-oil-derived) and malic acid (2,000 ppm with respect to the sebacicic acid) and 33.3 parts by mass of isophorone diisocyanate were poured, followed by 6-hour reaction at a temperature of from 100°C to 105°C while introducing nitrogen gas. Radiational cooling was peformed to a temperature close to a room temperature, and after adding 402 parts by mass of ethyl acetate and 173 parts by mass of isopropyl alcohol were added, 6.8 parts by mass of isophorone diamine were added to cause chain extension, and 0.3 part by mass of monoethanolamine were further added. After that, 1.2 parts by mass of isophorone diamine and 0.5 part by mass of diethylenetriamine were added. As a result, polyurethane resin varnish G (solid content 30 mass%, amine value 3.2) was obtained.

### <Preparation example of polyurethane resin varnish H (biomass polyurethane, dimer acid, 1.1=1.6, amine value 3.2, malic acid 2,000 ppm)>

In a four-mouth flask including a mixer, a cooling pipe, and a nitrogen gas introduction pipe, 200 parts by mass of polyester diol having an average molecular weight of 2,000 and obtained from 1,3-propanediol (plant-derived), dimer acid (plant-derived), and malic acid (2,000 ppm with respect to the dimer acid), 35.5 parts by mass of isophorone diisocyanate were poured, followed by 6-hour reaction at a temperature of from 100°C to 105°C while introducing nitrogen gas. Radiational cooling was peformed to a temperature close to a room temperature, and after adding 401 parts by mass of ethyl acetate and 172 parts by mass of isopropyl alcohol, 8.2 parts by mass of isophorone diamine was added to cause chain extension, and 0.35 part by mass of monoethanolamine was further added to cause a reaction. After that, 1.3 parts by mass of isophorone diamine and 0.6 part by mass of diethylenetriamine were added to cause reaction termination. As a result, polyurethane resin varnish H (solid content 30 mass%, amine value 3.2) was obtained.

### <Preparation example of polyurethane resin varnish I (biomass polyurethane, sebacic acid/succinic acid, 1.1=1.6, amine value 3.2, malic acid 2,000 ppm)>

In a four-mouth flask including a mixer, a cooling pipe, and a nitrogen gas introduction pipe, 200 parts by mass of polyester diol having an average molecular weight of 2,000 obtained from 1,3-propanediol (plant-derived), sebacic acid (plant-oil-derived)/succinic acid (plant-derived)=70/30 (mass ratio) and malic acid (2,000 ppm with respect to the sebacic acid) and 35.5 parts by mass of isophorone diisocyanate were poured, followed by 6-hour reaction at a temperature of from 100°C to 105°C while introducing nitrogen gas. Radiational cooling was peformed to a temperature close to a room temperature, and after adding 401 parts by mass of ethyl acetate and 172 parts by mass of isopropyl alcohol, 8.2 parts by mass of isophorone diamine was added to cause chain extension, and 0.35 part by mass of monoethanolamine was further added to cause a reaction. After that, 1.3 parts by mass of isophorone diamine and 0.6 part by mass of diethylenetriamine were added to cause reaction termination. As a result, polyurethane resin varnish I (solid content 30 mass%, amine value 3.2) was obtained.

### <Preparation example of polyurethane resin varnish J (biomass polyurethane, sebacic acid, 1.1=1.6, amine value 0, malic acid 2,000 ppm)>

In a four-mouth flask including a mixer, a cooling pipe, and a nitrogen gas introduction pipe, 200 parts by mass of polyester diol having an average molecular weight of 2,000 obtained from 1,3-propanediol (plant-derived), sebacic acid (plant-oil-derived) and malic acid (2,000 ppm with respect to the sebacicic acid) and 35.5 parts by mass of isophorone diisocyanate were poured, followed by 6-hour reaction at a temperature of from 100°C to 105°C while introducing nitrogen gas. Radiational cooling was peformed to a temperature close to a room temperature, and after adding 407 parts by mass of ethyl acetate and 176 parts by mass of isopropyl alcohol, and 9.2 parts by mass of isophorone diamine were added to cause chain extension. Further, 0.7 part by mass of monoethanolamine was added to cause reaction termination. As a result, polyurethane resin varnish J (solid content 30 mass%, amine value 0) was obtained.

### <Preparation example of polyurethane resin varnish K (biomass polyurethane, sebacic acid, amine value 3.2, I.I=1.6)>

In a four-mouth flask including a mixer, a cooling pipe, and a nitrogen gas introduction pipe, 200 parts by mass of polyester diol having an average molecular weight of 2,000 and obtained from 1,3-propanediol (plant-derived) and sebacic acid (plant-oil-derived) and 35.5 parts by mass of isophorone diisocyanate were poured, followed by 6-hour reaction at a temperature of from 100°C to 105°C while introducing nitrogen gas. Radiational cooling was peformed to a temperature close to a room temperature, and after adding 401 parts by mass of ethyl acetate and 172 parts by mass of isopropyl alcohol, 8.2 parts by mass of isophorone diamine was added to cause chain extension, and 0.35 part by mass of monoethanolamine was further added to cause a reaction. After that, 1.3 parts by mass of isophorone diamine and 0.6 part by mass of diethylenetriamine were added to cause reaction termination. As a result, polyurethane resin varnish K (solid content 30 mass%, amine value 3.2) was obtained.

### <Preparation example of polyurethane resin varnish L (biomass polyurethane, sebacic acid, amine value 3.2, 1.1=1.6, malic acid 500ppm)>

In a four-mouth flask including a mixer, a cooling pipe, and a nitrogen gas introduction pipe, 200 parts by mass of polyester diol having an average molecular weight of 2,000 and obtained from 1,3-propanediol (plant-derived), sebacic acid (plant-oil-derived) and malic acid (500 ppm with respect to the sebacic acid), 35.5 parts by mass of isophorone diisocyanate were poured, followed by 6-hour reaction at a temperature of from 100°C to 105°C while introducing nitrogen gas. Radiational cooling was peformed to a temperature close to a room temperature, and after adding 401 parts by mass of ethyl acetate and 172 parts by mass of isopropyl alcohol, 8.2 parts by mass of isophorone diamine was added to cause chain extension, and 0.35 parts by mass of monoethanolamine was further added to cause a reaction. After that, 1.3 parts by mass of isophorone diamine and 0.6 part by mass of diethylenetriamine was added to cause reaction termination. As a result, polyurethane resin varnish L (solid content 30 mass%, amine value 3.2) was obtained.

### <Examples A1 to A16, Comparative examples A1, A2, Reference examples A1, A2: Preparation examples of flexible package laminate white print ink composition>

A pigment (titanium oxide R-960, manfuactured by Dupon), the polyurethane resin varnish A to J, vinyl chloride/vinyl acetate-based resin (Solbin TA-3 manufactured by Nissin Chemical Co., Ltd.) were kneaded using a paint conditioner manufactured by Red Devil, and a solvent was further added. As a result, flexible package laminate white ink compositions of Examples A1 to A16, Comparative examples A1, A2, and Reference examples A1, A2 shown in Table 1 were obtained.

### <Examples A17, A18: Preparation example of flexible package laminate indigo ink composition>

A pigment (phthalocyanine blue, C.I.15:4), polyurethane resin varnish A and C, vinyl chloride/vinyl acetate-based resin (Solbin TA-3, manufactured by Nissin Chemical Co., Ltd.) were kneaded using a paint conditioner manufactured by Red Devil, and a solvent was further added. As a result, flexible package laminate indigo ink compositions of Examples A17, A18 shown in Table 1 were obtained.

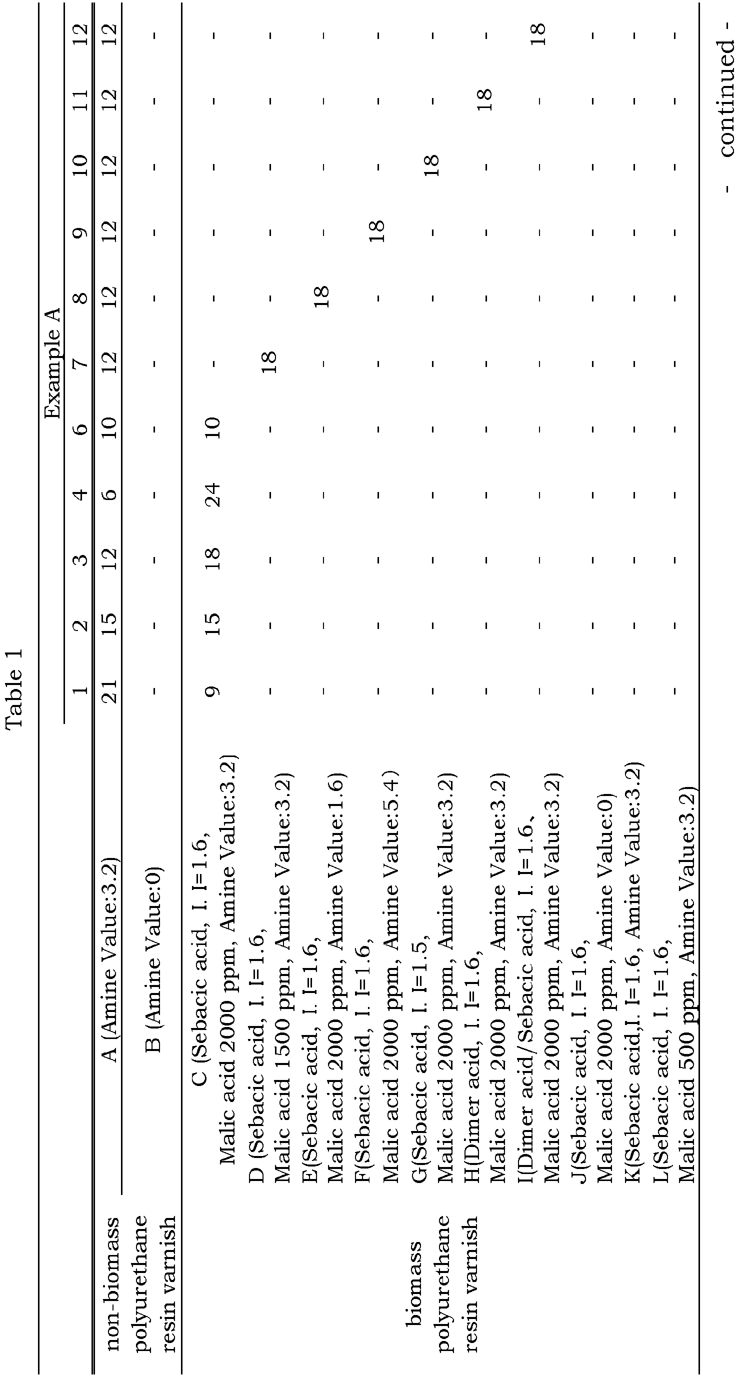

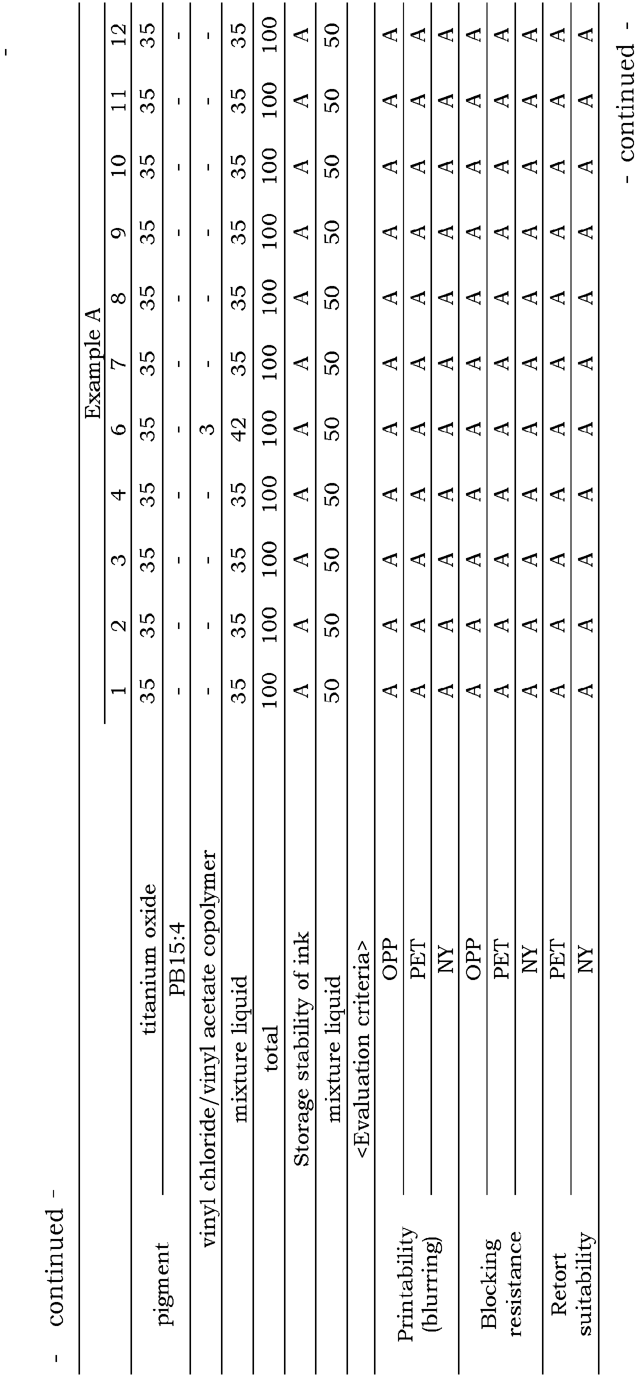

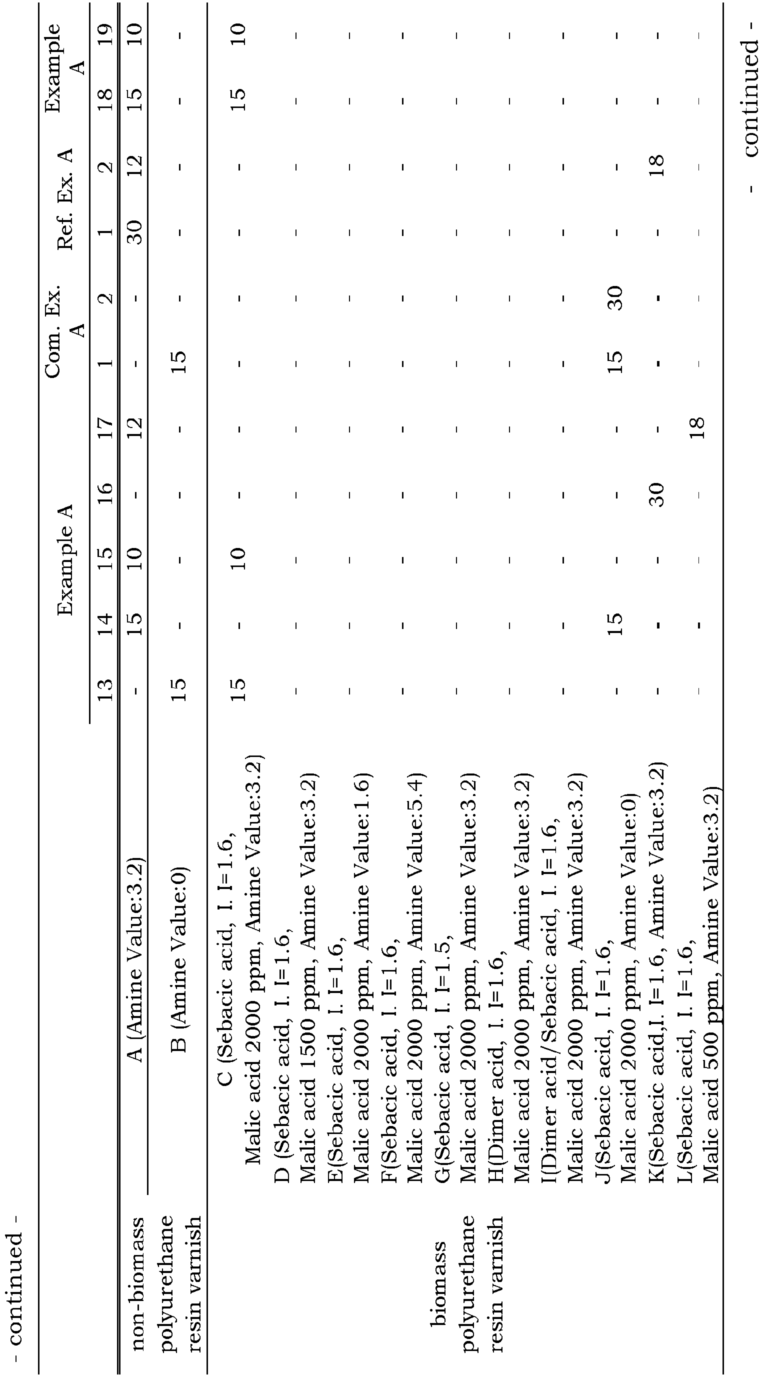

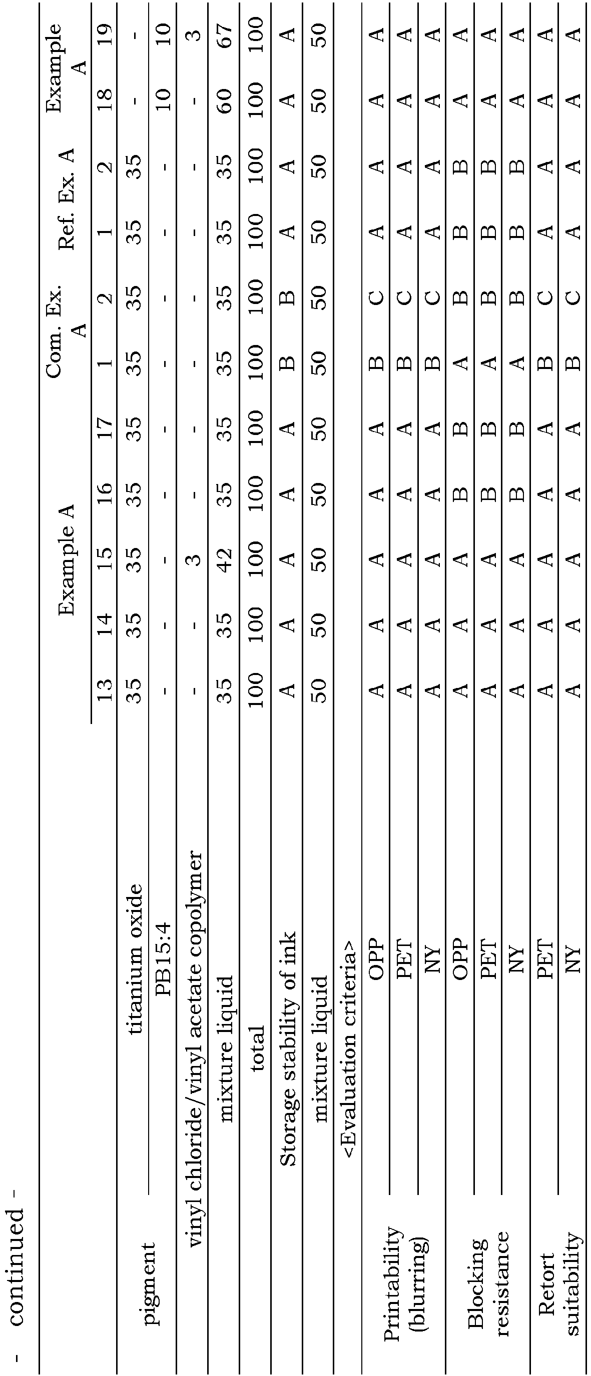

### (Evaluation)

Performance evaluations were performed by the following methods for the flexible package laminate white ink compositions obtained above of Examples A1 to A16, Comparative examples A1, A2 and Reference Examples A1, A2, and the flexible package laminate indigo ink compositions obtained above of Examples A17, A18. Evaluation results are shown in Table 1.

### <Storage stability of ink>

Flexible package laminate white ink compositions of Examples A1 to A16, Comparative examples A1, A2, and Reference Examples A1, A2 and flexible package laminate indigo ink compositions of Examples A17, A18 obtained above were collected in a glass bin, and storage stability of the inks was evaluated based on the following evaluation criteria from presence of deposition of a pigment at the time of preservation for 14 days at an atmospheric temperature of 60°C.

### (Evaluation criteria)

A: No deposition of ink was found, and storage stability was favorable.
B: Deposition of ink was found, and storage stability was poor.

### (Print evaluation)

With respect to flexible package laminate white ink compositions of Examples A1 to A16, Comparative examples A1, A2, and Reference Examples A1, A2, and flexible package laminate indigo ink compositions of Examples A17, A18, 100 parts by mass of each of the compositions was diluted with 50 pats by mass of a mixture liquid based on the blend shown in Table 1, and a viscosity was adjusted to 15 seconds with Zahn cup 3 avilable from RIGO CO., LTD., and gravure print machine with a gravure plate (print plate, helio 175/inch) was used to perform printing on a proess surface of OPP, PET, NY at a print speed of 150 m/min.

### <Regarding Film>

PET: polyethylene terephthalate film subjected to corona discharge treatment on one side surface thereof, manufactured by Toyobo Co., Ltd., E-5102, thickness 12 µm
OPP: biaxially-oriented polypropylene film, manufactured by Toyobo Co., Ltd., P-2161, thickness 30 µm
NY: nylon film, manufactured by Toyobo Co., Ltd., N-1102, thickness 15 µm

### (Blocking resistance)

A printed surface of each of printed matters elapsed one day after printing of each test ink was lminated with each film subjected to corona discharge treatment, and a load of 3 kg/cm² was applied thereto, followed by allowing to stand at 45°C for one day. Thereafter, the printed surface was peeled from the film surface, and migration of he printed ink to the film surface was evaluated in accordance with the following evaluation criteria.

### (Evaluation criteria)

A: There is no resistance in peeling the film, and ink is not peelded from the printed surface.
B: There is a resistance in peeling the film, but no ink is peeled from the printed surface.
C: There is a resistance in peeling the film, and ink is peeled from the printed surface.

### (Printability (blurring))

Printability was evaluated in accordance with the following evaluation criteria from a proportion of an area of blurring resulting from blocking of an ink on a printed portion of a printing plate at the time of completion of printing.

### (Evaluation criteria)

A: No blurring was found at all.
B: Blurring was found slightly.
C: Much blurring was found.

### (Retort suitability)

With the elapse of one day after printing on polyethylene terephthalate (PET) and nylon (NY), a urethane adhesive (Takelac A-525/Takenate A-52, manufactured by Mitsiu Chemicals & SKC Polyurethanes Inc.) was applied in a coating amount of 2.0 g/m² of a solid content to each printed article, and thereafter, an unstretchedpolypropylene film (RXC-22, thickness: 60 µm, manufactured by Mitsiu Chemicals Tohcello, Inc) was laminated using dry laminating machine, followed by allowing to stand at 40°C for three days to obtain a dry laminate. This laminate was formed into a package, and after filling a mixture comprising 90% by weight of water and 10% by weight of salad oil in the package, and then the package was sealed. The laminate with the printed PET was dipped in 135°C pressurized hot water for 60 minutes, and retort suitability was evaluated from a degree of laminate floating. The laminate with the printed NY was subjected a similar test evaluation 120°C, and was evaluated in accordance with the following evaluation criteria. By this evaluation, laminate suitability can be determined.
A: No laminate floating is found at all.
B: A pinhole-shaped laminate floating or a partially thin and short laminate floating is found.
C: A long stripe-like laminate floating is found on a whole surface.

As shown in Table 1, any of the ink compositions of Examples A1 to A18 was excellent in printability, blocking resistance and retort suitability. On the other hand, in the ink compositions of Comparative Examples A1 and Comparative Examples A2 using a polyurethane resin which did not comprise at least either one of a primary amino group or a secondary amino group at a terminal thereof, storage stability of the ink was poor and printability and retort suitability were inferior. In particular, the ink composition of Comparative Examples A2 was inferior also in blocking resistane.

### [Examples related to second invention]

### <Preparation example of polyurethane resin varnish A (non-biomass polyurethane, amine value 3.2) >

In a four-mouth flask including a mixer, a cooling pipe, and a nitrogen gas introduction pipe, 200 parts by mass of 3-methyl-1,5-pentyleneadipate diol having an average molecular weight of 2,000, 17.6 parts by mass of isophorone diisocyanate and 21.0 parts by mass of hydrogenated MDI were poured, followed by 6-hour reaction at a temperature of from 100°C to 105°C while introducing nitrogen gas. Radiational cooling was peformed to a temperature close to a room temperature, and after adding 400 parts by mass of ethyl acetate and 171 parts by mass of isopropyl alcohol, 8.2 parts by mass of isophorone diamine was added to cause chain extension, and 0.35 part by mass of monoethanolamine was further added to cause a reaction. After that, 1.3 parts by mass of isophorone diamine and 0.6 part by mass of diethylenetriamine were added to cause reaction termination. As a result, polyurethane resin varnish A (solid content 30 mass%, amine value 3.2) was obtained.

### <Preparation example of polyurethane resin varnish B (non-biomass polyurethane, amine value 0)>

In a four-mouth flask including a mixer, a cooling pipe, and a nitrogen gas introduction pipe, 200 parts by mass of 3-methyl-1,5-pentyleneadipate diol having an average molecular weight of 2,000, 17.6 parts by mass of isophorone diisocyanate and 21.0 parts by mass of hydrogenated MDI were poured, followed by 6-hour reaction at a temperature of from 100°C to 105°C while introducing nitrogen gas. Radiational cooling was peformed to a temperature close to a room temperature, and after adding 406 parts by mass of ethyl acetate and 175 parts by mass of isopropyl alcohol, 9.2 parts by mass of isophorone diamine was added to cause chain extension. Further, 0.7 part by mass of monoethanolamine was added to cause reaction termination. As a result, polyurethane resin varnish B (solid content 30 mass%, amine value 0) was obtained.

### <Preparation example of polyurethane resin varnish C (biomass polyurethane, amine value 3.2)>

In a four-mouth flask including a mixer, a cooling pipe, and a nitrogen gas introduction pipe, 200 parts by mass of polyester diol having an average molecular weight of 2,000 and obtained from 1,3-propanediol (plant-derived) and sebacic acid (castor oil-derived), 17.6 parts by mass of isophorone diisocyanate and 21.0 parts by mass of hydrogenated MDI were poured, followed by 6-hour reaction at a temperature of from 100°C to 105°C while introducing nitrogen gas. Radiational cooling was peformed to a temperature close to a room temperature, and after adding 400 parts by mass of ethyl acetate and 171 parts by mass of isopropyl alcohol, 8.2 parts by mass of isophorone diamine was added to cause chain extension, and 0.35 part by mass of monoethanolamine was further added to cause a reaction. After that, 1.3 parts by mass of isophorone diamine and 0.6 part by mass of diethylenetriamine were added to cause reaction termination. As a result, polyurethane resin varnish C (solid content 30 mass%, amine value 3.2) was obtained.

### <Preparation example of polyurethane resin varnish D (biomass polyurethane, amine value 3.2>

In a four-mouth flask including a mixer, a cooling pipe, and a nitrogen gas introduction pipe, 200 parts by mass of polyester diol having an average molecular weight of 2,000 and obtained from 1,3-propanediol (plant-derived) and dimer acid (plant-derived), 17.6 parts by mass of isophorone diisocyanate and 21.0 parts by mass of hydrogenated MDI were poured, followed by 6-hour reaction at a temperature of from 100°C to 105°C while introducing nitrogen gas. Radiational cooling was peformed to a temperature close to a room temperature, and after adding 400 parts by mass of ethyl acetate and 171 parts by mass of isopropyl alcohol, 8.2 parts by mass of isophorone diamine was added to cause chain extension, and 0.35 part by mass of monoethanolamine was further added to cause a reaction. After that, 1.3 parts by mass of isophorone diamine and 0.6 part by mass of diethylenetriamine were added to cause reaction termination. As a result, polyurethane resin varnish D (solid content 30 mass%, amine value 3.2) was obtained.

### <Preparation example of polyurethane resin varnish E (biomass polyurethane, amine value 3.2>

In a four-mouth flask including a mixer, a cooling pipe, and a nitrogen gas introduction pipe, sebacic acid (plant-oil-derived)/succinic acid (plant-derived)=70/30 (mass ratio), 200 parts by mass of polyester diol having an average molecular weight of 2,000 and obtained from 1,3-propanediol (plant-derived), 17.6 parts by mass of isophorone diisocyanate and 21.0 parts by mass of hydrogenated MDI were poured, followed by 6-hour reaction at a temperature of from 100°C to 105°C while introducing nitrogen gas. Radiational cooling was peformed to a temperature close to a room temperature, and after adding 400 parts by mass of ethyl acetate and 171 parts by mass of isopropyl alcohol, 8.2 parts by mass of isophorone diamine was added to cause chain extension, and 0.35 part by mass of monoethanolamine was further added to cause a reaction. After that, 1.3 parts by mass of isophorone diamine and 0.6 part by mass of diethylenetriamine were added to cause reaction termination. As a result, polyurethane resin varnish E (solid content 30 mass%, amine value 3.2) was obtained.

### <Preparation example of polyurethane resin varnish F (biomass polyurethane, amine value 0>

In a four-mouth flask including a mixer, a cooling pipe, and a nitrogen gas introduction pipe, sebacic acid (castor oil-derived), 200 parts by mass of polyester diol having an average molecular weight of 2,000 and obtained from 1,3-propanediol (plant-derived), 17.6 parts by mass of isophorone diisocyanate and 21.0 parts by mass of hydrogenated MDI were poured, followed by 6-hour reaction at a temperature of from 100°C to 105°C while introducing nitrogen gas. Radiational cooling was peformed to a temperature close to a room temperature, and after adding 406 parts by mass of ethyl acetate and 175 parts by mass of isopropyl alcohol, and 9.2 parts by mass of isophorone diamine were added to cause chain extension. Further, 0.7 part by mass of monoethanolamine was added to cause reaction termination. As a result, polyurethane resin varnish F (solid content 30 mass%, amine value 0) was obtained.

### <Examples B1 to B10, Comparative examples B1, B2, Reference example B1: Preparation of flexible package laminate white print ink composition>

A pigment (titanium oxide R-960, manfuactured by Dupon), the polyurethane resin varnish A to E, vinyl chloride/vinyl acetate-based resin (Solbin TA-3 manufactured by Nissin Chemical Co., Ltd.) were kneaded using a paint conditioner manufactured by Red Devil, and a solvent was further added. As a result, flexible package laminate white ink compositions of Examples B1 to B10, Comparative examples B1, B2, and Reference example B1 shown in Table 2 were obtained.

### <Examples B11, B12: Preparation example of flexible package laminate indigo ink composition>

A pigment (phthalocyanine blue, C.I.15:4), polyurethane resin varnish A and C, vinyl chloride/vinyl acetate-based resin (Solbin TA-3, manufactured by Nissin Chemical Co., Ltd.) were kneaded using a paint conditioner manufactured by Red Devil, and a solvent was further added. As a result, flexible package laminate indigo ink compositions of Examples B11, B12 shown in Table 2 were obtained.

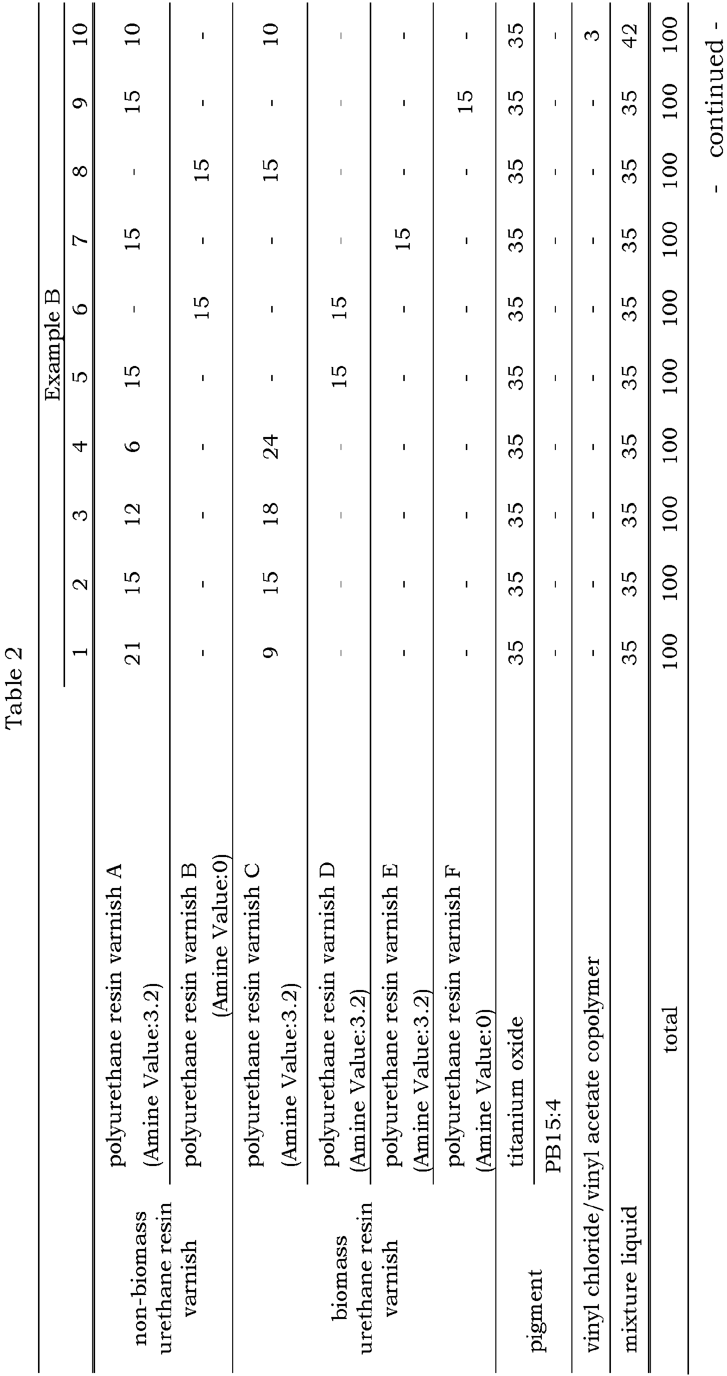

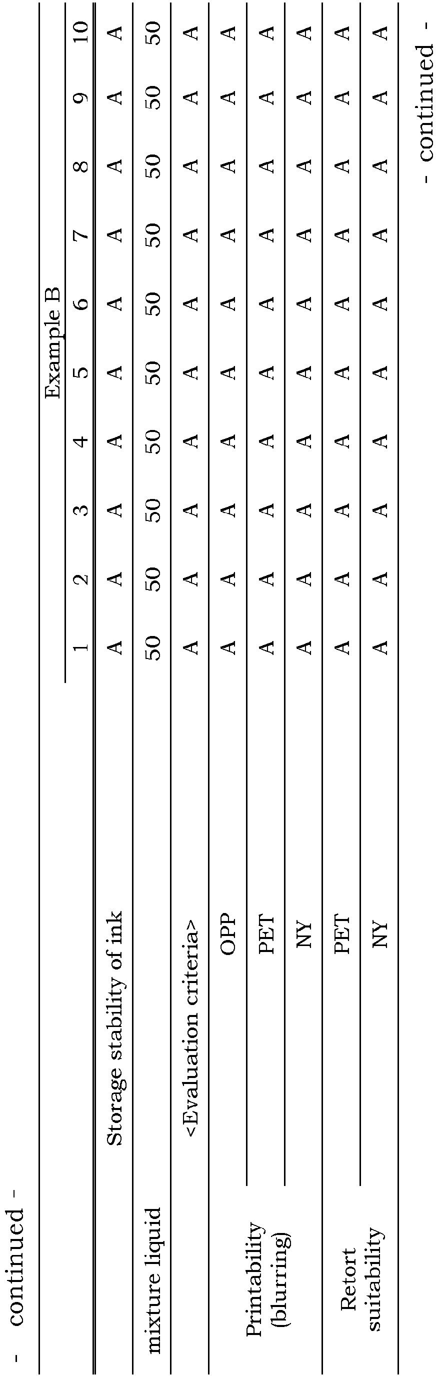

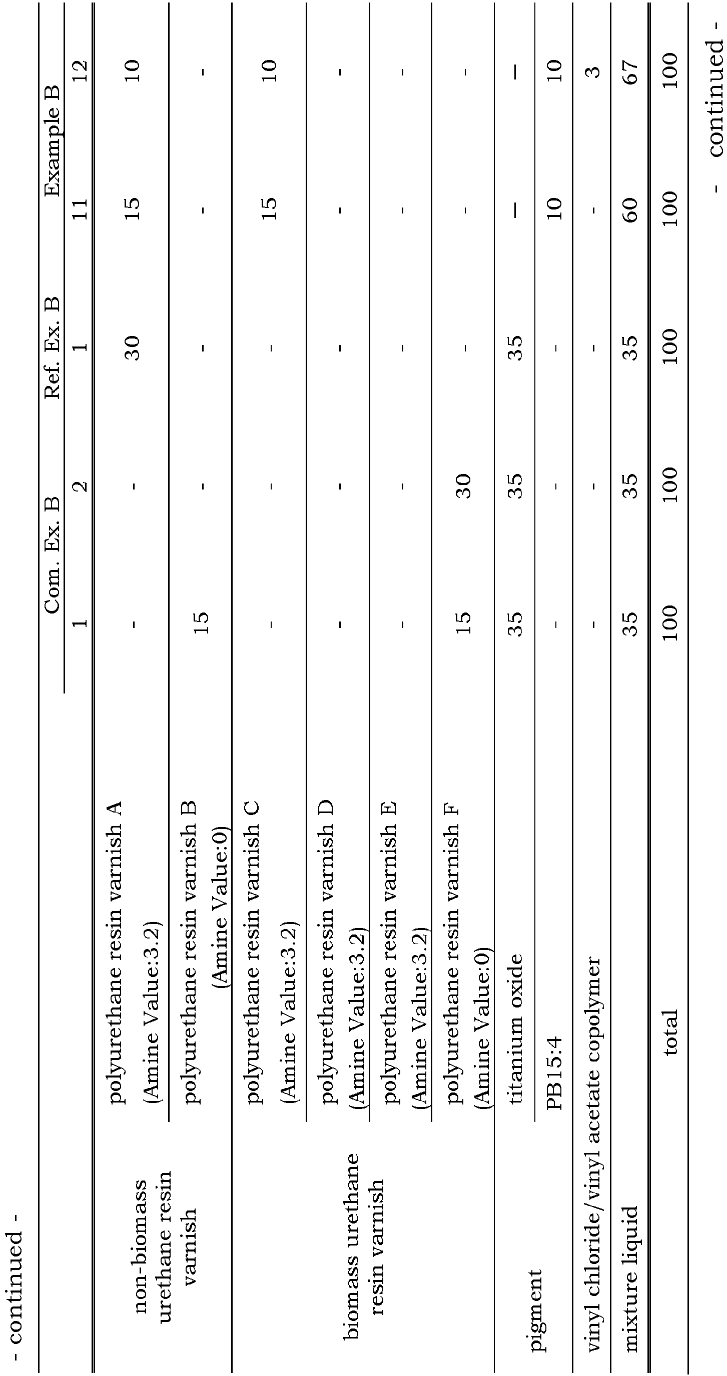

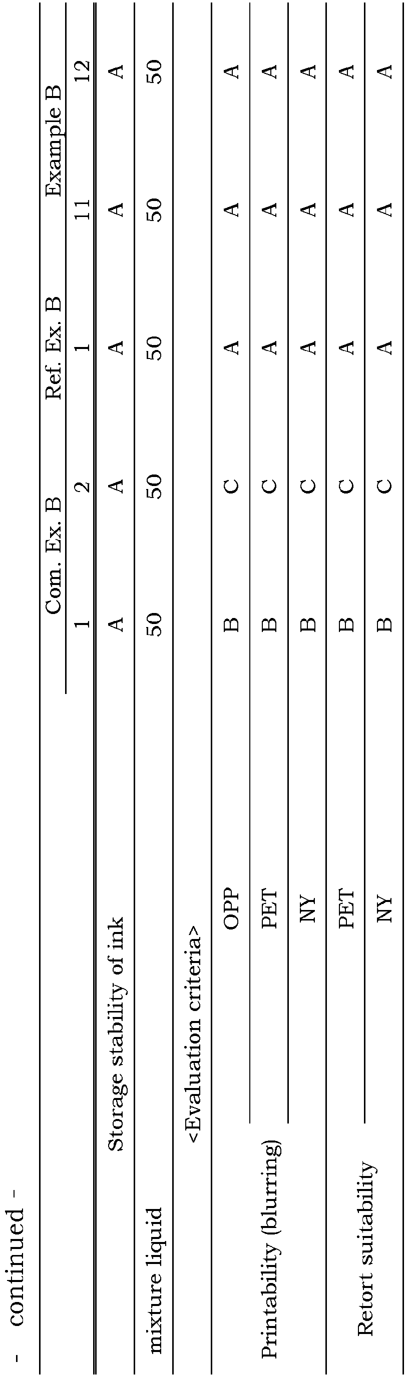

### (Evaluation)

Performance evaluations were performed by the following methods for the flexible package laminate white ink compositions obtained above of Examples B1 to B10, Comparative examples B1, B2 and Reference Example B1, and the flexible package laminate indigo ink compositions obtained above of Examples B11, B12. Evaluation results are shown in Table 2.

### <Storage stability of ink>

Flexible package laminate white ink compositions of Examples B1 to B10, Comparative examples B1, B2, and Reference Example B1 and flexible package laminate indigo ink compositions of Examples B11, B12 obtained above were collected in a glass bin, and storage stability of the inks was evaluated from presence of deposition of a pigment at the time of preservation for 14 days at an atmospheric temperature of 60°C.

### (Evaluation criteria)

A: No deposition of ink was found, and storage stability was favorable.
B: Deposition of ink was found, and storage stability was poor.

### (Print evaluation)

With respect to flexible package laminate white ink compositions of Examples B1 to B10, Comparative examples B1, B2, and Reference Example B1, and flexible package laminate indigo ink compositions of Examples B11, B12, 100 parts by mass of each of the compositions was diluted with 50 pats by mass of a mixture liquid based on the blend shown in Table 2, and a viscosity was adjusted to 15 seconds with Zahn cup 3 avilable from RIGO CO., LTD., and gravure print machine with a gravure plate (print plate, helio 175/inch) was used to perform printing on a proess surface of OPP, PET, NY at a print speed of 150 m/min.

### <Regarding Film>

PET: polyethylene terephthalate film subjected to corona discharge treatment on one side surface thereof, manufactured by Toyobo Co., Ltd., E-5102, thickness 12 µm
OPP: biaxially-oriented polypropylene film, manufactured by Toyobo Co., Ltd., P-2161, thickness 30 µm
NY: nylon film, manufactured by Toyobo Co., Ltd., N-1102, thickness 15 µm

### (Printability (blurring))

Printability was evaluated from a proportion of an area of blurring resulting from blocking of an ink on a printed portion of a printing plate at the time of completion of printing.

### (Evaluation criteria)

A: No blurring was found at all.
B: Blurring was found slightly.
C: Much blurring was found.

### (Retort suitability)

With the elapse of one day after printing on polyethylene terephthalate (PET) and nylon (NY), a urethane adhesive (Takelac A-525/Takenate A-52, manufactured by Mitsiu Chemicals & SKC Polyurethanes Inc.) was applied in a coating amount of 2.0 g/m² of a solid content to each printed article, and thereafter, an unstretchedpolypropylene film (RXC-22, thickness: 60 µm, manufactured by Mitsiu Chemicals Tohcello, Inc) was laminated using dry laminating machine, followed by allowing to stand at 40°C for three days to obtain a dry laminate. This laminate was formed into a package, and after filling a mixture comprising 90% by weight of water and 10% by weight of salad oil in the package, and then the package was sealed. The laminate with the printed PET was dipped in 135°C pressurized hot water for 60 minutes, and retort suitability was evaluated from a degree of laminate floating. The laminate with the printed NY was subjected a similar test evaluation 120°C. By this evaluation, laminate suitability can be determined.
A: No laminate floating is found at all.
B: A pinhole-shaped laminate floating or a partially thin and short laminate floating is found.
C: A long stripe-like laminate floating is found on a whole surface.

## Claims

1. A flexible package laminate print ink composition, comprising:
a pigment;
a binder resin; and
an organic solvent,
wherein the binder resin includes a polyurethane resin,
wherein the polyurethane resin includes a biomass polyurethane resin obtained by a reaction of a biopolyester polyol component and an organic diisocyanate component, and includes, at a terminal thereof, at least one of a primary amino group and a secondary amino group,
wherein the biopolyester polyol component is a reaction product of a dicarboxylic acid and diol, and does not include an organic acid having three or more active hydrogen groups, each having a molecular weight equal to or less than 300 in one molecule, or includes the organic acid so as to be equal to or less than 3,000 ppm with respect to the dicarboxylic acid, and at least one of the dicarobxylic acid and the diol is plant-derived,
wherein a ratio of an NCO group of the organic diisocyanate component to an OH group of the polyester polyol component in the polyurethane resin is NCO group/OH group=1.2 to 3.0, and
wherein a content of the biomass polyurethane resin in the polyurethane resin is 5 mass% to 100 mass%.

2. The flexible package laminate print ink composition according to claim 1, wherein the biopolyester polyol component is biopolyester polyol obtained by a reaction of a plant-derived short-chain diol component, an organic acid component having three or more active hydrogen groups, each having a molecular weight equal to or less than 300 in one molecule, and a plant-derived carboxylic acid component.

3. The flexible package laminate print ink composition according to claim 2,
wherein the plant-oil-derived dicarboxylic acid component is at least one selected from the group consisting of a sebacic acid, a succinic acid, and a dimer acid, and
wherein the organic acid including three or more active hydrogen groups in one molecule is a malic acid.

4. A flexible package laminate print ink composition, comprising:
a pigment;
a binder resin; and
an organic solvent,
wherein the binder resin includes a polyurethane resin,
wherein the polyurethane resin includes a biomass polyurethane resin, and includes, at a terminal thereof, at least one of a primary amino group and a secondary amino group,
wherein a content of the biomass polyurethane resin in the polyurethane resin is 10 mass% to 100 mass%.

5. The flexible package laminate print ink composition according to claim 4,
wherein the biomass polyurethane resin is a biomass polyurethane resin obtained by a reaction of a biopolyol component and an isocyanate component, and
wherein the biopolyol component is a biopolyester polyol (B) obtained by a reaction of a plant-derived short-chain diol component having 2 to 4 carbon atoms and a plant-derived carboxylic acid component.

6. The flexible package laminate print ink composition according to claim 5, wherein the carboxylic acid component is at least one selected from the group consisting of a sebacic acid, a succinic acid, and a dimer acid.

7. The flexible package laminate print ink composition according to claim 2, 3, 5, or 6, wherein the isocyanate component is plant-derived bioisocyanate.

8. The flexible package laminate print ink composition according to any one of claims 1 to 7, wherein the biomass polyurethane resin and a polyurethane resin other than the biomass polyurethane resin includes, at a terminal thereof, at least one of a primary amino group and a secondary amino group.

9. The flexible package laminate print ink composition according to any one of claims 1 to 8, further comprising at least one compound selected from the group consisting of a vinyl chloride/vinyl acetate copolymer having a hydroxyl group, a gun cotton, and a cellulose acetate propionate resin.
